(19) **Europäisches Patentamt** / **European Patent Office** / **Office européen des brevets**

(11) **EP 4 560 543 A1**

(12) **EUROPEAN PATENT APPLICATION**

(43) Date of publication:
**28.05.2025 Bulletin 2025/22**

(21) Application number: **23307057.2**

(22) Date of filing: **27.11.2023**

(51) International Patent Classification (IPC):
**G06N 10/60** $^{(2022.01)}$

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal**
**91300 Massy (FR)**

(72) Inventors:
- **NAGHMOUCHI, Mohamed Yassine**
  **91300 Massy (FR)**
- **COELHO, Wesley da Silva**
  **91300 Massy (FR)**

(74) Representative: **Slingsby Partners LLP**
**1 Kingsway**
**London WC2B 6AN (GB)**

(54) **METHOD AND SYSTEM FOR DETERMINING A SOLUTION TO A MASTER PROBLEM USING A QUANTUM COMPUTER**

(57)    A computer implemented method determines a solution to a Master Problem, MP, the MP derived from a Mixed-Integer Program, MIP, problem and associated with a Sub-Problem, SP. The method comprises determining, using a quantum computer, a solution to a first version of the MP. The first version of the MP comprises a first initial constraint. The solution to the first version of the MP comprising: a first value for the group of one or more respective integer variables. The SP is run, using the one or more first values, to determine either: a third value, corresponding to the dual problem, for a solution for the SP; a fourth value corresponding to an extreme ray. Using the third value or fourth value, a further constraint for a second version of the MP is generated. The second version of the MP is generated by replacing the first initial constraint with the further constraint. A further solution to the second version of the MP is determined, using the quantum computer.

Fig. 1

EP 4 560 543 A1

**Description**

<u>Field</u>

The present invention is in the field of using a quantum computer in a method or system to find a solution to a master problem, in particular, but not limited to, using an analogue neutral atom quantum computer and generating constraints from a sub problem associated with the master problem.

<u>Background</u>

Combinatorial optimization problems are fundamental in numerous industrial sectors such as logistics, planning, telecommunications, resource management, and many others.

Optimization problems directly contribute to the operational efficiency and effectiveness of organizations. Their solutions often yield significant economic and strategic benefits.

Nonetheless, as these problems grow in size, they become increasingly challenging from a computational standpoint, and finding optimal solutions can pose a significant computational challenge. Growing in size may be, for example, the amount of data (e.g., number of machines, trains, employees etc.) to consider. Despite these complexities, the drive to enhance efficiency in these areas motivates the continual development of advanced optimization techniques.

Mixed Integer Linear Programming (MILP) has also begun to garner attention in the field of optimization, where the computational challenges are amplified by the mixture of integer and continuous variables. Classically, decomposition optimization approaches have proven efficient in solving MILPs, dividing larger problems into smaller, more tractable subproblems, and these strategies have attracted the interest of researchers.

Benders Decomposition (BD) stands out for its effectiveness in handling the computational complexity of MILPs by isolating and fixing selected integer variable, a process known as restriction. This technique is particularly valuable in stochastic programming, which involves a mix of integer and continuous variables.

Although Benders Decomposition (BD) is a powerful tool, it faces certain challenges. The technique can experience slow convergence due to time-consuming iterations, ineffective initial solutions, weak Benders' cuts, and the existence of multiple equivalent solutions that stagnate the progress in consecutive iterations. These issues have triggered efforts to enhance the classical BD algorithm. Efforts include the development of enhanced stabilization methods within combinatorial optimization. Such efforts include: J. Naoum-Sawaya and S. Elhedhli, "An interior-point benders based branch-and-cut algorithm for mixed integer programs," Annals of Operations Research, vol. 210, pp. 33-55; 2013; T. G. Crainic, M. Hewitt, and W. Rei, Partial decomposition strategies for two-stage stochastic integer programs. CIRRELT, 2014, vol. 88.; Y. Yang and J. M. Lee, "A tighter cut generation strategy for acceleration of benders decomposition," Computers & Chemical Engineering, vol. 44, pp. 84-93, 2012.; C. I. F'abi'an and Z. Sz"oke, "Solving two-stage stochastic programming problems with level decomposition," Computational Management Science, vol. 4, pp. 313-353, 2007. ; A. J. Rubiales, P. A. Lotito, and L. A. Parente, "Stabilization of the generalized benders decomposition applied to short-term hydrothermal coordination problem," IEEE Latin America Transactions, vol. 11, no. 5, pp. 1212-1224, 2013.

Further efforts include strategies for producing multiple solutions and cuts in each iteration. N. Beheshti Asl and S. MirHassani, "Accelerating benders decomposition: multiple cuts via multiple solutions," Journal of Combinatorial Optimization, vol. 37, pp. 806-826, 2019.

The article by E. Farhi, J. Goldstone, and S. Gutmann, "A quantum approximate optimization algorithm," arXiv preprint arXiv:1411.4028, 2014. utilizing Quantum Approximate Optimization Algorithms (QAOA) has demonstrated that these problems do not always require exact solutions; instead, approximate solutions are often adequate, particularly when they can be found quickly for practical applications.

Some decomposition approaches have previously been proposed for the hybrid quantum-classical resolution of Mixed Integer Linear Programming problems. For instance, a hybrid quantum-classical Benders' decomposition algorithm was proposed where the Benders' master problem is transformed into a Quadratic Unconstrained Binary Optimization (QUBO) model and solved using a quantum annealer in Z. Zhao, L. Fan, and Z. Han, "Hybrid quantum benders' decomposition for mixed-integer linear programming," in 2022 IEEE Wireless Communications and Networking Conference (WCNC). IEEE, 2022, pp. 2536-2540.

In the article by N. G. Paterakis, "Hybrid quantum-classical multi-cut benders approach with a power system application," Computers & Chemical Engineering, vol. 172, p. 108161, 2023., a multicut Benders decomposition approach was adapted as a hybrid quantum-classical solver for general MILP problems. Here, the selection of Benders' cuts, is managed by quantum computing, and the master as well as the sub-problems are solved using classical computing.

Yet, MILP problems can be large, challenging the capacity of current quantum devices. A strategy used to overcome the potential lack of resources involves decomposing MILP problems into smaller subproblems, solved iteratively using a combined quantum-classical approach in N. Franco, T. Wollschlager, B. Poggel, S. Gunnemann, and J. M. Lorenz, "Efficient milp decomposition in quantum computing for relu network robustness," arXiv preprint arXiv:2305.00472, 2023. In this article, two decomposition methods, Benders and Dantzig-Wolfe, were studied. The Benders approach, while broadly applicable to any MILP problem, demands an exponentially large number of qubits in the worst-case scenario due to the dynamic increase of the number of constraints during the resolution. On the contrary, Dantzig-Wolfe remains constant in its qubit requirement but is only applicable to problems with a specific structure, i.e., block constraints MILP.

In the article by M. Ponce, R. Herrman, P. C. Lotshaw, S. Powers, G. Siopsis, T. Humble, and J. Ostrowski, "Graph decomposition techniques for solving combinatorial optimization problems with variational quantum algorithms," arXiv preprint arXiv:2306.00494, 2023., a decomposition algorithm for Quantum Approximate Optimization Algorithm (QAOA) was used to solve the MaxCut problem. However, this method is heuristic and problem-specific, with no attempt made to generalize it for other types of problems.

Furthermore, there are different attempts to solve NP-hard problems. For instance, authors in D. T. Do, N. Trieu, and D. T. Nguyen, "Quantum-based distributed algorithms for edge node placement and workload allocation," arXiv preprint arXiv:2306.01159, 2023., propose a quantum computing-based method to solve the optimal edge server placement and workload allocation using. This study uses a hybrid quantum-classical solution to decompose the original problem into a QUBO problem and a Linear Program (LP) subproblem. They don't use neutral atom quantum technology and the QAOA algorithm. The subproblems are solved using the Alternating Direction Method of Multipliers (ADMM). This ADMM method is described in S. Boyd, N. Parikh, E. Chu, B. Peleato, J. Eckstein et al., "Distributed optimization and statistical learning via the alternating direction method of multipliers," Foundations and Trends in Machine learning, vol. 3, no. 1, pp. 1-122, 2011., however, it can only be applied when subproblems are independent, unlike in Benders decomposition.

Prior attempts to use quantum systems for problems decomposed into master and sub problems have suffered from inflexibility due to the types of quantum computer used and sequential additive nature of successive constraints. Prior attempts have also been non-optimum because several constraints developed during the Benders algorithm may become redundant or not effective to producing a solution to the overall problem. Encoding such constraints increases the number of qubits needed.

## Summary

In a first aspect there is presented a computer implemented method (2) for determining a solution to a Master Problem (4), MP, the MP derived from a Mixed-Integer Program, MIP (6), problem and associated with a Sub-Problem (8), SP; the MIP (6) problem for providing a solution to: a first group (x) of one or more integer variables (x1, x2, xn); and, a second group (y) of one or more first continuous variables (y1, y2, yn); the MP (4) for outputting one or more solutions for: the group (x) of one or more respective integer variables (x1, x2, xn); the SP (8), comprising: one or more primal problems (10) comprising the group (y) of one or more first continuous variables (y1, y2, yn); and, one or more dual problems (12) associated with the primal problem (10); the method comprising: I) determining, using a quantum computer (14), one or more solutions (s1) to a first version (MP1) of the MP; the first version of the MP comprising at least a first initial constraint (ci1); the solution to the first version of the MP comprising: one or more first values ($\hat{x}$) for the group (x) of one or more respective integer variables (x1, x2, xn); and, II) running the SP, using the one or more first values ($\hat{x}$), to determine either: a third value ($\hat{\mu}$), corresponding to the dual problem, for a solution for the SP; a fourth value (r) corresponding to an extreme ray; III) generating, using the third value or fourth value, a further constraint (c1) for a second version of the MP (MP2), IV) generating the second version of the MP (MP2) by replacing the first initial constraint (ci1) with the further constraint (c1); V) determining, using the quantum computer (14), a further solution (s2) to the second version of the MP (MP2).

The method of the first aspect may be adapted according to any teaching herein, including but not limited to any of the options for the second aspect and/or any one or more of the following options.

Optionally, where 'one or more' problems are described, the different problems (where there is a plurality of problems) may refer to different versions of problem. Such versions may differ by one or more constraints, typically such as cut constraints. Optionally, any one or more of the different versions of any of the: MP, SP, DP, PP; may be generated at least partially using a previous version of the same problem such as the immediately previous version. The method may optionally use an iterative process.

Optionally, the MP (4) is for outputting a second continuous variable ($\phi$).

Optionally, the solution to the first version of the MP comprises a further second value (v) for the second continuous variable ($\phi$).

Optionally, the determining of the third value ($\hat{\mu}$) corresponds to the running of the SP finding at least one feasible solution.

Optionally, the solution to the SP is an optimal solution.

Optionally, the determining of the fourth value (r) corresponds to the running of the SP finding no feasible solutions.

Optionally, the further constraint comprises either:

a) a first further constraint comprising the third value ($\hat{\mu}$) and representing a feasibility cut; or,

b) a second further constraint comprising the fourth value (r) and represents an optimality cut.

Optionally, the further constraint is an inequality.

Optionally, the first version of the MP may further comprise a second initial constraint (ci2); the method may further comprise selecting, for replacement, the first initial constraint from the group of the first initial constraint and second initial constraint.

Optionally, the method may further comprise selecting the first initial constraint (ci1), from the group of the first initial constraint (ci1) and second initial constraint (ci2), based on the second initial constraint (ci2) providing an increased convergence to a solution of the MIP than the first initial constraint. Optionally, this selection may be made using a quantum computer.

Optionally, the method further comprises encoding any of the versions of the MP into an unconstrained binary optimisation model.

Optionally, the method further comprises encoding any of the versions of the MP into a Quadratic Unconstrained Binary Optimisation, QUBO, model. In another example, this could be a Higher-Order Unconstrained Binary Optimisation Problem (HUBO).

Optionally, the method comprises converting the further constraint into a penalty function for the QUBO.

Optionally, the method further comprises determining a number of qubits for the QUBO and replacing the first initial constraint with the further constraint upon comparing the determined number of qubits to a threshold number of qubits.

Optionally, the method comprises determining a Hamiltonian using the QUBO, the Hamiltonian for use in operating the quantum computer.

Optionally, the method comprises determining the relative positions of the qubits using the Hamiltonian, or generating the Hamiltonian from a determination of the relative positions of the qubits (in space) wherein the said relative positions are derived from the QUBO and optionally calculated using a classical computer.

Optionally, the method comprises determining one or more characteristics of an EM wave, for inputting to the qubits of the quantum computer, using the Hamiltonian.

Optionally, the characteristics of the EM wave comprise any one or more of: Rabi frequency, detuning, and a time duration of the EM wave.

Optionally, the quantum computer comprises a plurality of qubits that transition, during a quantum computation, from an initial state to a final state wherein an Electro-Magnetic, EM, wave is input to interact with at least one of the qubits between its initial state and its final state. Optionally, the quantum computer is not an Annealer. Optionally, the quantum computer may utilise the non-adiabatic evolution of qubits.

Optionally, the quantum computer is an analogue quantum computer.

Optionally, the quantum computer is a neutral atom quantum computer.

Optionally, a classical computer may generate and output one or more control signals for operating the quantum computer. Optionally, the classical computer may receive one or more signals, such as electronic signals, output from the quantum computer. Such received signals may comprise one or more measured values of any one or more, preferably all, of the qubits used in the computation of the quantum computer.

The selection of a subset of constraints covering the solution(s) of the master problem, can be determined using a quantum computer. A quantum computer may be referred to as a Quantum Processing Units, (QPU). In particular neutral atoms QPUs may be suitable for any of MIP or MILP problems.

Optionally, the MP is a restricted master problem of an original master problem.

Optionally, the method may generate the original master problem from a decomposition of the MIP. Optionally, the integer variables are binary variables.

Optionally, the integer variables are positive variables.

Optionally, the continuous variables are positive variables.

Optionally, the method may generate an output after the running of the SP, the output comprising at least one of: (i) the first further constraint, upon comparing a fifth value ($f(\hat{x})$) to the second value ($\phi$); the fifth value ($f(\hat{x})$) corresponding to the solution to the SP; the first further constraint comprising the third value ($\mu$) and being different to the second further constraint; (ii) the second further constraint; (iii) a solution to the MIP, upon comparing the fifth value ($f(\hat{x})$) to the second value. The term 'running' is intended to mean the carrying out of the particular portion of the method using a quantum computer or classical computer.

Optionally, the solution output to the MIP may comprise the final solution.

A system is also presented comprising a classical computer and quantum computer, together configured to give rise to the method of the first aspect wherein the quantum computer may at least determine solution to the first and second versions of the MP. At least one, potentially any, of the remaining steps in the method may be performed by a classical computer. The system may optionally be adapted to include any of the optional features described for the associated method.

An example of such as system is a system comprising a computer processor and a quantum computer (14), and for determining a solution to a Master Problem (4), MP; the MP derived from a Mixed-Integer Program, MIP (6), problem and associated with a Sub-Problem (8), SP; the MIP (6) problem for providing a solution to: a first group (x) of one or more integer variables (x1, x2, xn); and, a second group (y) of one or more first continuous variables (y1, y2, yn); the MP (4) for outputting a solution for: the group (x) of one or more respective integer variables (x1, x2, xn); the SP (8), comprising: a primal problem (10) comprising the group (y) of one or more first continuous variables (y1, y2, yn); and, a dual problem (12) associated with the primal problem (10); the quantum computer configured to determine a solution (s1) to a first version (MP1) of the MP; the first version of the MP comprising at least a first initial constraint (ci1); the solution to the first version of the MP comprising: one or more first values ($\hat{x}$) for the group (x) of one or more respective integer variables (x1, x2, xn); and, the computer processor or the quantum computer configured to run the SP, using the one or more first values ($\hat{x}$), to determine either: a third value ($\hat{\mu}$), corresponding to the dual problem, for a solution for the SP; a fourth value (r) corresponding to an extreme ray; the computer processor configured to generate, using the third value or fourth value, a further constraint (c1) for a second version of the MP (MP2); the computer processor configured to generate the second version of the MP (MP2) by replacing the first initial constraint (ci1) with the further constraint; the quantum computer further configured to determine a further solution (s2) to the second version of the MP (MP2).

In a second aspect there is presented a computer implemented method for generating an output for a Mixed-Integer Program, MIP, problem; the MIP problem for providing a solution to: a first group (x) of one or more integer variables (x1, x2, xn); and, a second group (y) of one or more first continuous variables (y1, y2, yn); the MIP problem is associated with: A) a master problem, MP,; the MP for outputting one or more solution for: a) the group (x) of one or more respective integer variables (x1, x2, xn); and, b) a second continuous variable ($\phi$); B) a subproblem, SP, comprising: a primal problem comprising the group (y) of one or more first continuous variables (y1, y2, yn); and, a dual problem associated with the primal problem; the method comprising: I) determining, using a quantum computer comprising a plurality of qubits, a solution to a first version of the MP; the solution comprising: i) one or more first values ($\hat{x}$) for the group (x) of one or more respective integer variables (x1, x2, xn); and, ii) a second value for the second continuous variable ($\phi$); II) running the SP, using the one or more first values ($\hat{x}$), to determine either: a third value ($\hat{\mu}$), corresponding to the dual problem, for a solution for the SP; a fourth value (r) corresponding to an extreme ray; III) generating the output comprising at least one of: i) a first further constraint, for a further version of the MP, upon determining the fourth value (r); the first constraint comprising the third value (r); ii) a second further constraint, for the further version of the MP, upon comparing a fifth value (f($\hat{x}$)) to the second value ($\phi$); the fifth value (f($\hat{x}$)) corresponding to the solution to the SP; the second constraint comprising the third value ($\hat{\mu}$) and being different to the first constraint; iii) a solution to the MIP, upon comparing the fifth value (f($\hat{x}$)) to the second value.

The method of the second aspect may be adapted according to any teaching herein, including but not limited to any one or more of the options presented for the first aspect and/or any one or more of the following options.

Optionally, the quantum computer comprises the plurality of qubits that transition, during a quantum computation, from an initial state to a final state wherein an Electro-Magnetic, EM, wave is input to interact with at least one of the qubits between its initial state and its final state.

Optionally, the quantum computer is an analogue quantum computer.

Optionally, the quantum computer is a neutral atom quantum computer.

Optionally, the MIP problem is a Mixed-Integer Linear Program, MILP, problem.

Optionally, the MIP problem is a Mixed-Integer Non-Linear Program, MINLP, problem.

Optionally, the MIP problem is a maximisation problem.

Optionally, the MIP may comprise at least one initial constraint comprising the:

> group of one or more integer variables (x);
> group of one or more continuous variables (y).

Optionally, the at least one initial constraint comprises an inequality.

Optionally, the at least one initial constraint is a linear constraint.

Optionally, the at least one initial constraint comprises a summation of:

> a first term comprising the one or more integer variables (x); and,
> a second term comprising the one or more continuous variables (y).

Optionally, the first term in the initial constraint comprises a plurality of values at least partially defining the MIP problem.

Optionally, the first term in the initial constraint comprises a matrix (A) of values; the one or more integer variables (x) is a vector of integer variables; the matrix of values (A) being a coefficient to the vector of integer variables.

Optionally, the second term comprises a plurality of values at least partially defining the MIP problem.

Optionally, the second term comprises a matrix (G) of values; the one or more first continuous variables (y) is a vector of continuous variables; the matrix of values (G) being a coefficient to the vector of continuous variables.

Optionally, the MP is a restricted master problem of an original master problem.

Optionally, the method may generate the original master problem from a decomposition of the MIP. Optionally, the integer variables are binary variables.

Optionally, the integer variables are positive variables.

Optionally, the continuous variables are positive variables.

Optionally, the determining of the third value ($\hat{\mu}$) corresponds to the running of the SP finding at least one feasible solution.

Optionally, the solution to the SP is an optimal solution.

Optionally, the determining of the fourth value (r) corresponds to the running of the SP finding no feasible solutions.

Optionally, the first further constraint, for the further version of the MP, represents a feasibility cut.

Optionally, the first further constraint is an inequality.

Optionally, the second further constraint, for the further version of the MP, represents an optimality cut.

Optionally, the second further constraint is an inequality.

Optionally, the method further comprises encoding the MP into a determining a Quadratic Unconstrained Binary Optimisation, QUBO, model.

Optionally, the method comprises converting any of the first or second constraints into a penalty function for the QUBO.

Optionally, the method comprises representing the second continuous variable ($\phi$) as a plurality of binary bits.

Optionally, the method further comprises determining a number of qubits for the QUBO.

Optionally, the method comprises determining the relative positions of the qubits using the QUBO.

Optionally, the method comprises determining a Hamiltonian using the QUBO, the Hamiltonian for use in running the quantum computer. Optionally, the method may generate one or more output control signals for operating the quantum computer. The one or more control signals may be generated from a Hamiltonian.

Optionally, the method comprises determining one or more characteristics on the EM wave; the said characteristics associated with the Hamiltonian.

Optionally, the characteristics of the EM wave comprise any one or more of: Rabi frequency, detuning, and duration of the EM wave.

Optionally, the first version of the MP comprises a first initial constraint.

Optionally, the method comprises replacing, in the second version of the MP, the first initial constraint with either the first further constraint or the second further constraint.

Optionally, the first version of the MP comprises a second initial constraint.

Optionally, the method comprises: selecting the first initial constraint from the first initial constraint and second initial constraint; the first initial constraint being replaced by either the first further constraint or the second further constraint in the second version of the MP.

Optionally, the method may comprise determining the number of qubits required for running the second version of the MP if the MP comprised the first initial constraint and either one of the first further constraint or second further constraint.

Optionally, the method may compare the determined number of qubits to a threshold number of qubits and replace the first initial constraint with the first further constraint based on the comparison.

Optionally, the threshold number of qubits comprises the number of qubits of the quantum computer.

Optionally, the method may perform the replacement upon the determined number of qubits exceeding the threshold number of qubits.

A system is also presented comprising a classical computer and quantum computer configured to give rise to the method of the second aspect wherein the quantum computer may at least determine the solutions to one or more versions of the MP. At least one, potentially any, of the remaining steps in the method may be performed by a classical computer. The system may optionally be adapted to include any of the optional features described for the associated method.

Brief list of figures

Embodiments of the present invention will now be described in detail with reference to the accompanying drawings, in which:

Figure 1 is a pictorial example of a method for determining a solution to a Master Problem;

Figure 2 is an example of a flow chart for implementing the method;

Figure 3 in an example of a neutral atom quantum computer for use with the method;

Figure 4 is a further example of a neutral atom quantum computer for use with the method;

Figures 5a-5c exemplify atomic Rydberg transitions;

Figures 6a and 6b exemplify the Rydberg blockade;

Figure 7 shows an example flow chart of determining a solution for a MILP;

Figure 8 shows an example of an algorithm;

Figure 9 is a table showing values of a Proof of Concept, PoC;

Figures 10-12 show results from the PoC.

<u>Detailed description</u>

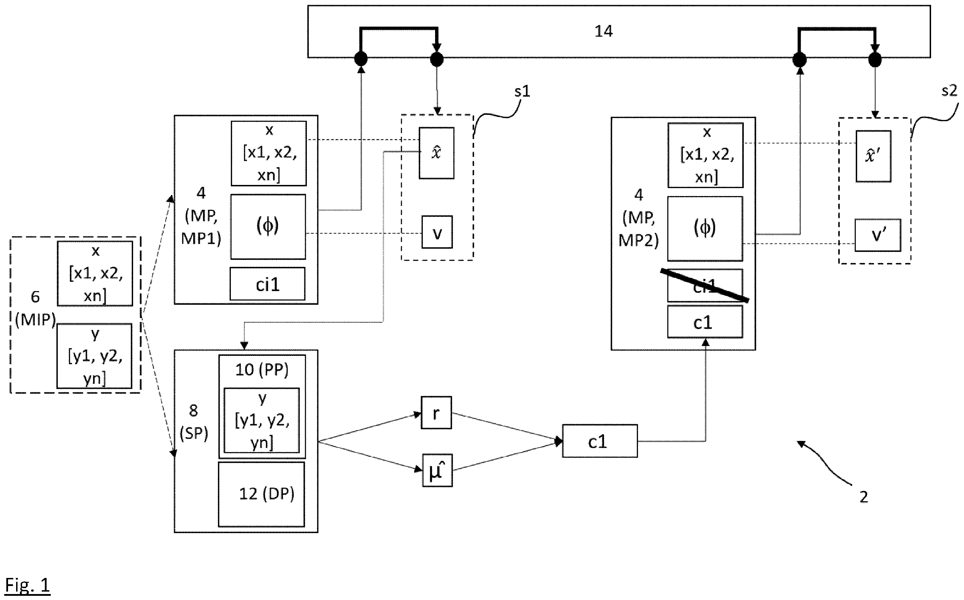

Figure 1 shows an example of a method 2 of a first aspect. The method may utilise Benders decomposition, or another type of decomposition that decomposes a main problem such as a Mixed-Integer Program (MIP) into a master problem (MP) and sub problem (SP). Different features of the method are discussed with respect to their optional further details and variations, such as, but not limited to: problems; solutions; parameters; variables; steps to generate problems and versions of problems; details of constraints and steps to generate constraints; type and details of a quantum computer used for the method; details of the operation of the quantum computer, type and details of a classical computer used with the method. These details and variations may be applied to other examples herein. Furthermore, such details and examples for the same or similar features in other examples herein may be used with this example of the method 2.

References to 'classical computer' are intended to be a computer, typically an electronic one, that performs a computation using classical bits rather than qubits. Examples of classical computers are disclosed elsewhere herein. The method may be 'computer implemented' in that at least one of the steps is performed using a classical computer. The classical computer may have one or more modules for performing each of the tasks. These modules may be hardware or software implemented.

The discussion underneath is made with respect to a method, however there is also presented a system comprising a quantum computer and a classical computer that gives effect to the method. In particular the solving of the master problem may be achieved using the quantum computer, whilst other steps may be performed by the classical computer. In another alternative the quantum computer maybe used to solve the sub problem whilst a classical computer may be used to solve the master problem. The quantum computer may be used to perform other steps in the method aside from solving the master problem, for example solving the sub problem, in particular the primal problem of the sub problem, or choosing a subset of further constraints to be added for the next version of the MP, in case more than one solution is given by the actual version of the MP. If the quantum computer outputs the primal problem, then a classical computer may take the output solution of the primal problem from the quantum computer and calculate the dual solution.

The classical computer may perform any one or more of the computations in the method that the quantum computer does not do. For example, the classical computer may perform, but is not limited to, any one or more of the following: generating one or more versions of a SP; running a solver for solving any version of the SP; generating constraints; determining a MP and SP by decomposing the MIP; determining a restricted MP from a decomposed MP; compare an output from the solving of the SP to determine a further output such as a type of constraint to generate and/or whether to stop the process of finding a solution to the MIP; determine a final solution to the MIP; encode the MP into a model suitable for a quantum computer; developing a Hamiltonian operator; determining one or more signals (such as electrical signals) used to control and operate the quantum computer (for example a signal comprising: data for setting up the quantum computer and/or data for running the computation such as parameters of an electromagnetic signal).

Turning back to figure 1, the method 2 is preferably at least partially computer implemented and is for determining a solution to a Master Problem 4, herein referred to as 'MP'. In this example at least two different versions of the MP are used, however in other examples herein, only a single version may be used. The method may use more than two versions of the master problem such as 5, 10, 20 100 versions. The different versions may differ in the order in which they are executed and/or the constraints they have, for example two different versions of the master problem MP may be executed at different times and have a different set of one or more constraints.

The MP is derived from a Mixed-Integer Program 6, herein referred to as 'MIP'. The MIP may be a Mixed Integer Linear Program (MILP) or a Mixed Integer Nonlinear Program (MINLP) such as a Mixed Integer Quadratic problem. The MP is associated with a Sub-Problem 8, herein referred to as 'SP'. The SP is also derived from the MIP. The derivation of the MP and SP from the MIP may form part of the method, or the method may start from the MP and SP already being provided. The MIP problem may be a maximisation problem or a minimisation problem.

The MIP problem comprises a first group (x) of one or more integer variables (x1, x2, xn). The MIP problem also comprises a second group (y) of one or more first continuous variables (y1, y2, yn). Typically, the first group (x) and second group (y) are vectors.

The MP 4 is configured, when run on a problem-solving apparatus (such as a solver on a classical computer, or a quantum computer), for providing: a) a solution to the group (x) of one or more respective integer variables (x1, x2, xn) as set out in the MIP; and b) a solution to a second continuous variable ($\phi$). Typically, the second continuous variable ($\phi$) is not directly contained in the MIP but generated as a result of generating the MP. Furthermore, the method presented herein may not utilise the second continuous variable ($\phi$), however for the purposes of the example in figure 1, we assume the second continuous variable ($\phi$) is used.

The SP 8 comprises a primal problem, PP, 10 and a dual problem, DP, 12 that are linked together through duality theory principles in linear programming. The PP comprising the group (y) of the one or more first continuous variables (y1, y2, yn) contained in the MIP.

The method uses a quantum computer, QC, to run either one, or both of the MP and SP. In figure 1 the QC is used for providing a solution to the MP, in particular a plurality of versions of the MP wherein each version is executed by the QC sequentially in time. In principle the SP may be solved by the QC. The quantum computer may be an analogue quantum computer. Preferably, the quantum computer is a neutral atom quantum computer, however other types of quantum computer may be used, such as any of: digital quantum computers, ion-based quantum computers and photonic-based quantum computers. An example of a preferred quantum computer for running the MP on is disclosed elsewhere herein. A neutral atom system has advantages over other systems such as Quantum annealers using Josephson junctions. Firstly, the neutral atom system does not need to adiabatic (i.e., it can be non-adiabatic). Secondly, the neutral atom system is more versatile due to the ability to easily form new atom registers with different numbers of qubits and different configurations.

In the example of figure 1, the QC 14 is used to provide a solution s1 to a first version MP1 of the MP. The solution to the first version of the MP comprises one or more first values ($\hat{x}$) for the group (x) of one or more respective integer variables (x1, x2, xn). The one or more first values ($\hat{x}$) may be a vector. The solution to the first version of the MP further comprises a second value (v) for a second continuous variable ($\phi$). The first version of the MP (MP1) comprises at least a first initial constraint ci1. The first initial constraint ci1 is typically, but not exclusively, an inequality. Each or any version of the MP may comprise one or more initial constraints. Further details about different constraints are described elsewhere below, however, the first initial constraint ci1, of the first version MP1 of MP, is typically, but not exclusively a linear constraint and preferably contains the group of one or more integer variables (x).

Thus, the MP, and preferably each version of the MP comprises at least two variables (x) and ($\phi$). These are decision variables. An example of a preferred form of the objective function of the MP is shown in Equation 1,

$$\max_{x,\phi} c^T x + \phi$$

[Equ. 1]

where c is a group of one or more values representing parameters associated with the original MIP. The term 'c' may be a matrix or vector, such as a single column vector of parameter values.

The objective function may stay constant for each version of the MP, but the constraints may differ for different versions of the MP.

After the solution ($\hat{x}$) is output for the decision variable(s) (x), the method then runs the SP. The SP is preferably run on a solver on a classical computer, for example ILOG CPLEX. The SP uses the one or more first values ($\hat{x}$) to finds its outputs. In other words, the one or more first values ($\hat{x}$) are used by the solver in the execution of a solving algorithm to find one or more solutions to the SP. The output of the running (solving) of the SP may include at least one of either: a) a third value ($\hat{\mu}$), corresponding to the dual problem; b) a fourth value (r) corresponding to an extreme ray. The third value may correspond to the solver (or otherwise computation) finding a feasible solution to the objective function of the primal problem. An example of the objective function of the primal problem of the SP is shown in Equation 2,

$$\max_{y} h^T y$$

[Equ. 2]

where h is a group of one or more values representing parameters associated with the original MIP. The term 'h' may be a matrix or vector, such as a single column vector of parameter values.

The objective function of the dual problem of the SP may optionally take the form of equation 3:

$$\min_{\mu} f(\hat{x}) = (b - A\hat{x})^T \mu$$

[Equ. 3]

wherein the term $\mu$ here is a variable to minimise, whilst parameters b and A are each a group of one or more values related to the MIP problem as described below.

If the computation of solving the SP provides a feasible solution, then this solution may be an optimal solution or a non-optimal solution. Preferably, and typically, the solving of the SP will either find an optimal solution or no feasible solution. When the solution is optimal, the dual problem and primal problem have strong duality as represented by equation 4.

$$f(\hat{x}) = h^T y$$

[Equ. 4]

If either the third value ($\hat{\mu}$), corresponding to the dual problem variable $\mu$, or the fourth value (r) are output, then the method generates a further constraint (c1) for a second version of the MP (MP2). This further constraint (c1) comprises either the third value or fourth value. This step may be performed by a classical computer.

The method then generates the second version of the MP (MP2) by replacing the first initial constraint (ci1) with the further constraint (c1). The term replacement at least meaning that the second version MP2 of the MP does not contain first initial constraint ci1 and does contain the further constraint c1. Typically, the first initial constraint ci1 is different to the further constraint by at least one of: a parameter value; a variable; a symbol for performing an operation. The constraint may be an equation or an inequality. This step may be performed by a classical computer.

The method then further determines, using the quantum computer (14), a further solution (s2) to the second version of the MP (MP2). In this computation, the first initial constraint ci1 does not form part of the computation. The further solution has, similar to the solving of the first version of the MP, one or more first values ($\hat{x}$') for the group (x) of one or more respective integer variables (x1, x2, xn) and a second value (v) for a second continuous variable ($\phi$').

By replacing one constraint with another constraint, the method may provide several advantages.

Firstly, for where the quantum computer is qubit limited, the method may remove a constraint in favour of another constraint if the quantum computer is unable to implement both constraints in the computation. Thus, the method may take into account, before a further quantum computation is made, the hardware limitations of the quantum computer. This could be implemented, for example, by automatically removing one of the already existing constraints from the previous version of the MP and using the newly generated constraint. In this system the method could, say, have a predefined limit of the number of constraints to use and when that limit is reached the method starts to remove constraints. In an alternative the method may perform a calculation, for example on a classical computer, as to the number of qubits required to perform the newly generated master problem and compare it to a threshold number of qubits available. The result of the comparison may determine whether the newly generated constraint is added to the previous version of the MP or whether it replaces one of the previously included constraints. For example, if the number of required qubits to include all existing constraints in the previous version of the MP and the newly generated constraint is greater than the number of available qubits in the quantum computer, then the method may perform a replacement.

The newly generated version of the MP, (MP2) may be based off the immediately previous version of the MP (i.e. MP1). In other words, MP2 may comprise the objective function and all the constraints of MP1 subject to one or more constraint removals and replacements.

Secondly, the removal of a previous constraint may also act to optimally converge to a solution. Some pre-existing constraints may not be worth encoding into the quantum computation either because they are redundant from another better constraint or that the effect the constraint has on obtaining a solution to the MIP is minimal. The method may determine this in different ways including setting one or more criteria to measure the effectiveness of each constraint by and then removing one or more constraints based on the measurement. The method may, for example, order each constraint by virtue of effectiveness and choose the lowest ordered constraint for removal and replacement by the newly generated constraint. The determination of effectiveness of a constraint may be performed in different ways including whether, when the constraint was first used, it improved the second value for the second continuous variable ($\phi$) to the MP or MIP.

In the discussion above it is disclosed that the method may vary by not utilising the second continuous variable ($\phi$). An example of such a method would be when the method uses a stopping criteria not dependent upon the solution to the second continuous variable ($\phi$) and where optimality cuts are not generated by making a comparison to utilising the second continuous variable ($\phi$). For example, the method may be used to sequentially add and replace different feasibility constraints to successive versions of the MP wherein, in the end, the output is that no feasible solution is found.

Both the MIP and MP typically comprise one or more constraints to accompany its respective objective function.

The MIP may comprise one or more initial constraints. The initial constraints may define the domain of the variables. For example, constraints may define any of: the integer variables (x) are binary variables; the integer variables (x) are positive variables; the continuous variables (y) are positive variables.

The MIP may comprise at least one initial constraint comprising the group of one or more integer variables (x) and the group of one or more continuous variables (y). This may be termed a linking constraint. The linking constraint may comprise an inequality and may be a linear constraint. The linking constraint may comprise a summation of: a first term comprising the one or more integer variables (x); and, a second term comprising the one or more continuous variables (y). The first term may comprise a plurality of values at least partially defining the MIP problem. The first term in the linking constraint may comprise: a matrix (A) of values and the one or more integer variables (x) wherein (x) is a vector of integer variables. The matrix of values (A) may be a coefficient to the vector of integer variables. The second term may comprise a plurality of values at least partially defining the MIP problem. The second term comprises a matrix (G) of values and the one or more first continuous variables (y) wherein (y) is a vector of continuous variables. The matrix of values (G) may be a coefficient to the vector of continuous variables. An example of a linking constraint for the MIP is in equation 5.

$$Ax + Gy \leq b,$$

$$[\text{Equ. 5}]$$

In the discussion of the MP and SP above, both are derived from the MIP. This derivation may be conducted by a classical computer. There may be multiple states to transform the MIP into the versions of the MP and SP used in the method, in particular the formation of the MP for implementing on the quantum computer. The method may optionally generate a restricted version of the MP (which may be referred to as an RMP). The MP used in the methods described above for implementing on a quantum computer, may be an RMP. When decomposed, the PP of the SP comprises the linking constraint but utilises the parameters values of ($\hat{x}$) (found by the solution of the MP) instead of the variable (x). In general, the MP and or SP may have constraints that are the same as the MIP constraints and some constraints that are different. Typical constraints that may be used are shown in the detailed examples underneath. Although only a single version of the SP is discussed above, it is understood that multiple versions of the SP may be used, at least because of the possibility of multiple sets of different values ($\hat{x}$) are output from the MP and input into the SP, for example as a constraint in the PP or in the objective function of the DP of the SP.

The MP may have different types of constraints. A first type of constraint may be a 'cut'. Cuts may be subdivided into optimality cuts and feasibility cuts. Cuts may be generated by running a computation to solve the SP associated with the MP. A feasibility cut may be a constraint developed when no solution is found by the solving of the SP. An optimality cut may be a constraint developed when a solution, preferably an optimal solution, is found by the solving of the SP. An optimality cut may be associated with an extreme point. The optimality cut may be generated upon both: a) determining that the SP output a feasible solution; and b) a comparison of the value of the solution to the SP to the second value (v) for the second continuous variable ($\phi$). Preferably the comparison is to the value of the solution to the dual problem f ($\hat{x}$). The comparison may be an inequality such as the second value (v) being larger than f ($\hat{x}$), in the case the OP is a maximization problem. The comparison may be used as a stopping criterion, where the current values of the y and x variables in the respective MP are solutions to the MIP OP.

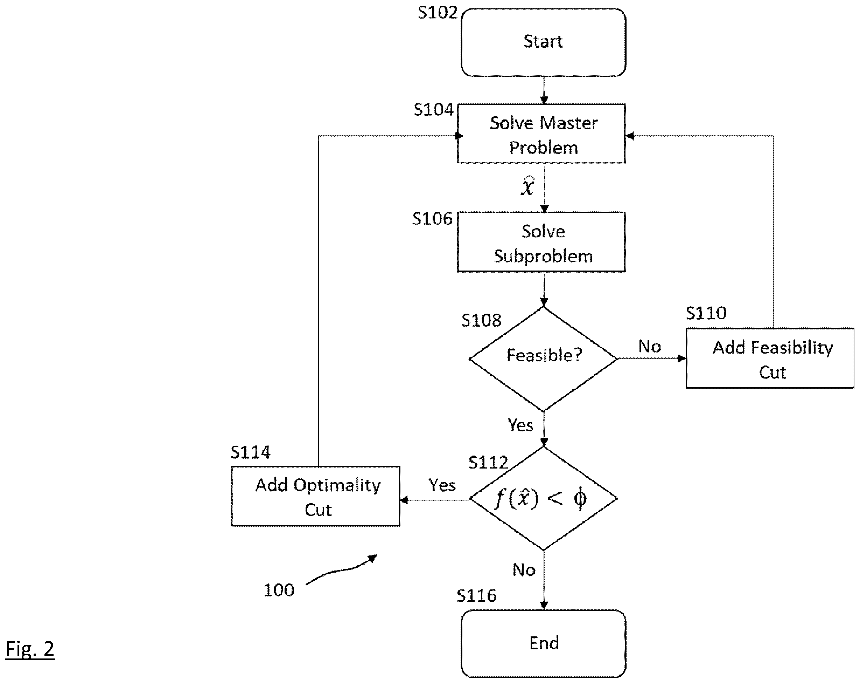

This above process is exemplified in the flow chart 100 of figure 2 which implements a Benders algorithm. The process starts at S102 wherein the master and sub problem are either provided or decomposed from the MIP. At step S104 the master problem is solved by the quantum computer to provide first values ($\hat{x}$) for group of integer decision variables (x). At the same time step S104 outputs a value for the continuous variable ($\phi$) (which is represented by the term $\phi$ in S112 in this figure). At step S106, the sub problem is solved by a standard solver hosted on a classical computer. In an alternative, this may be solved by a quantum computer. The solving of the sub problem includes the solving of the primal and dual problems of the sub problem. The first values ($\hat{x}$) are used within the sub problem, for example ($\hat{x}$) may be used in a constraint of the primal problem and in the objective function of the dual problem.

If the solver outputs no feasible solution, then a feasibility cut is generated at step S110 which is manifested as a further constraint to be input back into a further version of the master problem at step S104. If the solver outputs a feasible solution, then a comparison is made between the solution f ($\hat{x}$) to the dual problem and the value output by the quantum computer for the continuous variable ($\phi$). If f ($\hat{x}$) is equal to or greater than the value for the continuous variable ($\phi$) then the

process ends at step S116 and a solution to the MIP is output comprising the latest values of the decision variables (x) and (y). If f (x̂) is smaller than the value for the continuous variable (φ) then an optimality cut is generated at step S114 which is manifested as a further constraint to be input back into a further version of the master problem at step S104.

The process shown in figure 2 thus involves feedback loops which may consecutively add a further constraint for each iteration of the process when solving a new version of the master problem. In variations of this process and for any example herein, the method may output a plurality of different solutions to the variables in the master problem. For a single execution, the quantum computer may optionally generate multiple solutions. We can for example choose the best solutions. The SP may then respectively be solved for each of these output data values, which in turn may generate multiple different new further constraints for the next version of the MP.

In general, the initial version of the master problem used in the method may already have a cut constraint or may have no cut constraints. The method may thus start with the 'first initial constraint' being one generated by a process the same as or similar to that shown in figure 2. For example, the method may initially start with an initial version of the MP with no cut constraints. The initial MP version is run on a quantum computer and the output values are used to generate an optimality cut constraint in step S114. This newly generated cut constraint is then input into the next version of the MP. This next version of the MP is run on the quantum computer and the process on figure 2 is followed to find that a new Feasibility cut is generated at step S110. The following next version of the MP now has one optimality cut constraint and one feasibility cut constraint. This version is run on the quantum computer and the process in figure 2 is followed to provide a further optimality cut at S114. The newest optimality cut constraint is different to the previous optimality cut constraint. The method then removes one of the optimality or feasibility cut constraints from the previous run version of the MP to create a further new version of the MP that includes the newest generated optimality cut. This latest version of the MP is then run on the quantum computer and the process in figure 2 is followed wherein the decision to end the process is made at step S112.

Any of the teachings in this above example of running through figure 2 may be applied to any of the examples herein.

For example, there is presented an alternative method having a similar set-up of an MIP, MP and SP. The alternative method may comprise a step of determining, using a quantum computer comprising a plurality of qubits, a solution to a first version of the MP. The solution comprising: one or more first values (x̂) for the group (x) of one or more respective integer variables (x1, x2, xn); and, a second value for the second continuous variable (φ). The method may then comprise running the SP, using the one or more first values (x̂), to determine either: a third value (μ̂), corresponding to the dual problem, for a solution for the SP; or, a fourth value (r) corresponding to an extreme ray. The method may then comprise generating an output comprising at least one of the following three options.

The first option is a first further constraint, for a further version of the MP, upon determining the fourth value (r); the first constraint comprising the third value (r).

The second option is a second further constraint, for the further version of the MP, upon comparing a fifth value (f(x̂)) to the second value (φ); the fifth value (f(x̂)) corresponding to the solution to the SP; the second constraint comprising the third value (μ) and being different to the first constraint. The third option is a solution to the MIP, upon comparing the fifth value (f(x̂)) to the second value.

It should be noted that multiple of these options may be output. For example, the MP may be run multiple times to yield multiple different constraints.

To solve the master problem on the quantum computer, the method may optionally reformulate the master problem into a model that can be used to determine one or more parameters for controlling and operating the quantum computer. The type of reformulation depends on the type of quantum computer used. The output of a quantum computer is typically the final binary values of the measured qubits used in the quantum computation. The binary values 0 and 1 may be represented by some of the variables and parameters in the master problem but possibly not all of them. Thus, in one example, the method may generate a Quadratic Unconstrained Binary Optimisation, QUBO, model to represent the parameters and variables. The QUBO may be generated by a classical computer. The QUBO may be mapped to a Hamiltonian such as an Ising or XY Hamiltonian representing the physics of the quantum computer. One optional method is to generate the QUBO (or HUBO, for example) and computationally determine a register of qubits (for example the relative positions of the qubits), then computationally determine the characteristics of an EM wave for driving the qubits during the quantum computation wherein both the register and EM wave details build the Hamiltonian; then using the Hamiltonian to set-up and control the quantum computation. For example, the master problem may comprise binary integer variables in the vector (x) but continuous variables in the vector (y) and continuous parameters defining the problem. Thus, the MP in this example (and others) needs to be converted into binary by ensuring each variable and parameter in the MP that needs to be encoded into the QUBO is in a binary form. This may be done using standard binary encoding that and may utilise the use of slack variables, and/or via an exponential function with a second-order Taylor expansion in order to align the QUBO format. In the transformation of the MP into the QUBO, the objective function and each of the constraints may be transformed. A further example herein shows a non-limiting example as to how this may be accomplished although it should be appreciated other methods of transforming a problem with constraints with non-binary values and/or variables may be used.

The quantum computer used is preferably an analogue quantum computer that is run via input parameters derived from a Hamiltonian operator that is mapped to the QUBO model. The Hamiltonian operator is used for an analogue quantum computer via an evolution operator, as presented in equation 6. The evolution operator relates the output state | ψ (t)> of the qubits at time 't', to a solution to the problem we are trying to solve:

$$|\psi(t)\rangle = e^{-iH(t)}|\psi(0)\rangle$$

[Equ. 6]

where | ψ(0)> is the initial state of the qubits in the quantum system of the quantum computer and H(t) is the Hamiltonian operator that encodes the problem. In a neutral atom quantum computer one or more driving electromagnetic (EM) fields (typically one or more lasers) is imparted onto the qubits of the quantum computer. Typically, the Hamiltonian H(t) contains the data for the qubit positions and the properties of the driving EM field. The properties of the EM field that may vary over time and that are represented in the Hamiltonian operator are the Rabi frequency and wavelength detuning amounts. Further details of operators and a quantum computer for use with the method are discussed underneath.

General example of a neutral atom quantum computer system set-up for use with the methods and systems

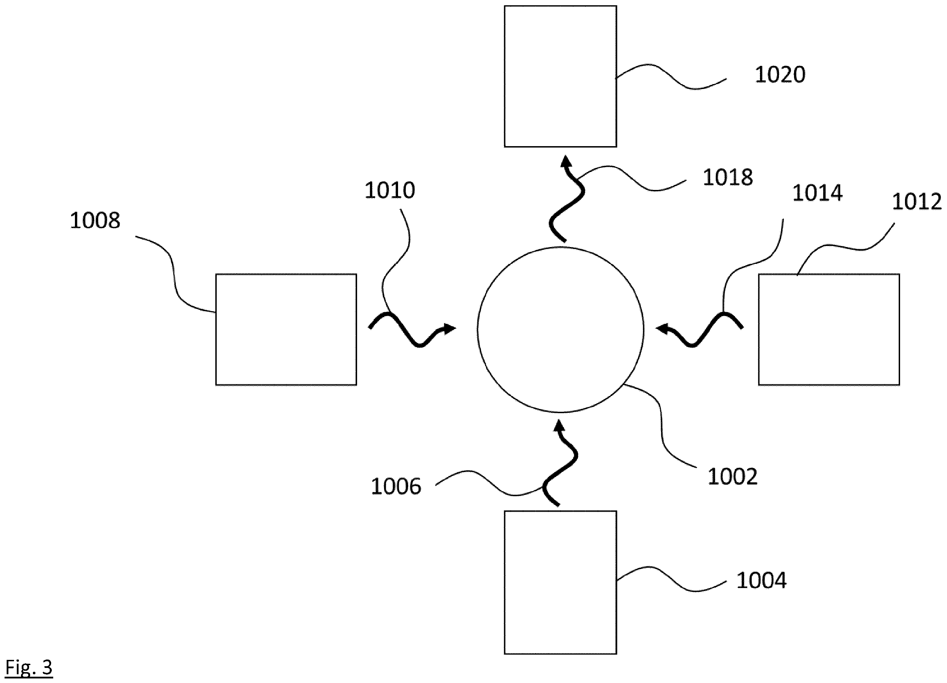

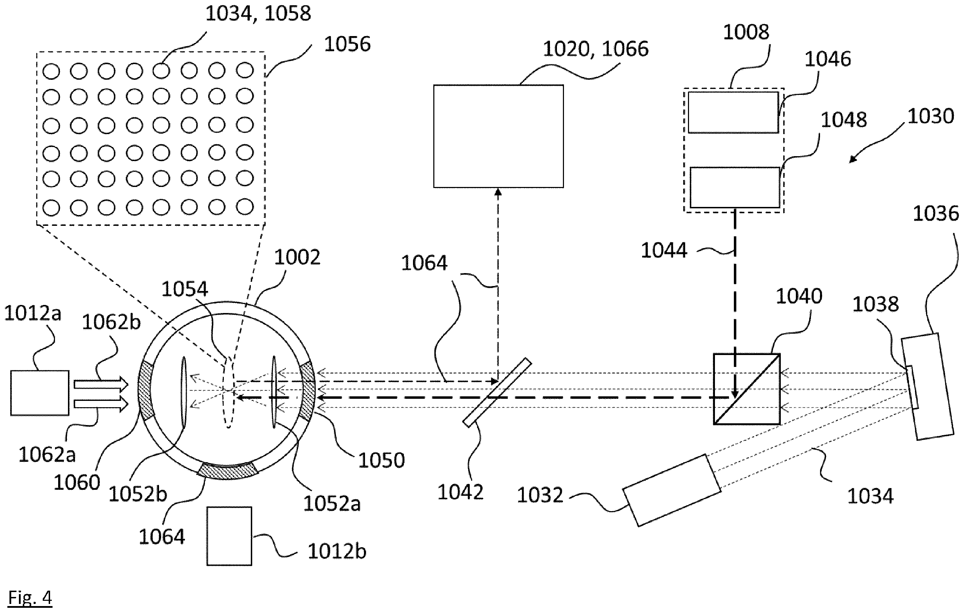

There now follows a discussion of an example analogue quantum computing system for optional use with the method and system presented herein. As discussed above, the method may in principle be applied to other analogue quantum computers such as ion trapped QCs. The method may be enacted by an apparatus, a system of components, a device or a plurality of devices. Figure 3 shows a general schematic of a set-up for neutral atom quantum computer. The set-up may be referred to as a 'quantum computing system'. Figure 4 shows a further, more detailed, example of such a set-up.

As a schematic, the positions and configurations of the elements in figure 3 are not supposed to imply any real-world size, positioning or configuration of features, but merely to illustrate an example of the key functioning components of a neutral atom quantum computing system that can be used with the methods and systems discussed herein.

In figure 3, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 3 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 3 shows the holding apparatus 1004 being external to the chamber 1002, however, the holding apparatus 1004 may form part of the chamber 1002 or be inside the chamber 1002. Although only a single holding apparatus 1004 is shown in figure 3, it is envisaged that more than one holding apparatus 1004 may be used.

An atom positioner 1008 is also shown in figure 3. The atom positioner 1008 is an apparatus that is able to controllably move one or more held atoms from one spatial position to another spatial position. For example, the atom positioner 1008 may move an atom trapped in one of the optical trap sites to another different trap site. Figure 3 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 3 we assume that optical signals 1010 are used such as, but not limited to, optical tweezers. Although only a single atom positioner 1008 is shown in figure 3, it is envisaged that more than one atom positioners 1008 may be used.

An atomic state actuator 1012 is also shown in figure 3. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 3, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 3 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 3. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 3 shows the detector 1020 being external to the chamber 1002, however, the detector 20 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 1004 emits signals into the chamber 1002 to create a plurality of optical traps.

B) Some of the ensemble of atoms in the chamber 1002 are automatically trapped by the plurality of traps.

C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.

D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.

E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 3, including but not limited to: the atoms used; the atomic state actuator 1012; the atom positioner 1008; the holding apparatus 1004; the detector 1020; the general operation; may be used with any other example presented herein.

Detailed example of a neutral atom quantum computer system set-up

Figure 4 shows a specific, non-limiting, example of a neutral atom quantum computing/system setup 30 that may be used with the method or system presented herein. The chamber 1002 is a vacuum chamber and a dilute atomic vapour is formed inside the chamber 1002. The chamber 1002 is an ultra-high vacuum system operating at room temperature, however other environmental temperatures may be formed inside the chamber 1002. Figure 4 is a more detailed example of figure 3 wherein like references in the figures represent like components.

This set-up may be adapted according to any teaching herein including, but not limited to, the features described above for figure 3. The set-up in figure 4 may also be referred to as a 'quantum processor' or 'quantum system'. It is to be understood that the example in figure 4 is just one example of a set-up for a quantum processor and provides a 2D array of optical trapping sites, however other set-ups may be used, for example to implement a 3D array of trapping sites by including a plurality of the below-mentioned components and/or different component locations and/or configurations. The example in figure 4 may also be adapted by removing components, adding components, combining components and re-positioning components.

In figure 4 a laser system 1032, comprising a laser and beam-expanding optics, outputs a cross-sectionally-wide collimated laser beam 1034 towards a spatial light modulator (SLM) 1036. The SLM 1036 and the laser system 1032 being equivalent to the holding apparatus 1004 in figure 4. The SLM 1036 comprises a 2D periodic array of controllable deformable mirrors 1038 which receive the collimated beam 1034 and selectively reflect portions of the beam 1034 towards a polarising beam splitter (PBS) 1040. The SLM 1036 outputs an adjustable phase pattern on the light 1034, that in turn gets converted into an intensity pattern 1058 by first lens 1052a, as described later. The polarisation of the reflected portions of the beam 1034 pass through the PBS 1040 and propagate towards a dichroic mirror 1042. It is understood that the laser system 1032 may have other components such as a polarisation rotator (not shown) for controllably adjusting the polarisation of output light 1034 incident upon the SLM 1036, so that the polarisation of light 1034 is aligned to the transmission axis of the PBS 1040.

The PBS 1040 also receives electromagnetic signals 1044 from an atom positioner 1008 comprising a laser 1046 and a 2D acousto-optic laser beam deflector 1048 that receives laser light from the laser 1046 and controls the direction of the laser light into the PBS 1040. In turn, this allows the deflector 1048 to use the laser light 1044 as an optical tweezer or an array of optical tweezers. The light 1044 output from the atom positioner 1008 is reflected by the PBS 1040 such that it is output from the PBS 1040 along a substantially similar path to the light 1034 output from the PBS 1040 that originates from the laser system 1032. The light beams 1034 and 1044 may at least partially overlap in space when output from the PBS 1040. The light 1044 originating from positioner 1008 that is reflected and output by the PBS 1040 is incident upon the dichroic mirror 1042.

It is noted that the position and direction of light rays in figure 4, such as beams 1034 and 1040, are shown spatially separate to each other, however this is merely for purposes of visual clarity in the figure and may not represent the beam positions in practice.

Both the light 1044 and 1034 output from the PBS 1040 pass through the dichroic mirror 1042 and are incident upon window 1050 of the chamber 1002. The window 1050 may be one of a plurality of windows in the chamber 1002 that are at least partially transparent to the wavelengths of the light that are incident upon them that are generated by the electromagnetic sources of the system 1030. The window 1050 forms part of the body of the chamber 1002 and is sealed with respect to the walls of the chamber such that the chamber 1002 holds a vacuum environment within it. Other components may be associated with the vacuum chamber 1002 by either being inside the chamber 1002, integrated with the chamber 1002 or immediately surrounding the chamber 1002 insofar that the components may input stimuli into the chamber 1002, such as electromagnetic fields or magnetic fields. One or more magnetic coils (not shown) may be included about the chamber 1002 to provide a spatially-varying magnetic field that, with the laser light 1034, acts to provide a magneto-optical trap (MOT). The laser light 1034 may have a wavelength configured to cool the atoms via the mechanism of doppler cooling. The light 1034 may be split and/or reflected by other optical components (not shown) to provide a plurality of beams propagating along different directions that intersect the trapping area 1054. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 1034, the magneto-optical trap. The quantum system 1030 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 1002 are a pair of convex lenses 1052a, 1052b. The first lens 1052a is positioned to receive light beams 1034 and 1044 passing through the window 1050 and focus them both onto a trapping area 1054 of minimum beam waist (i.e., at the focal plane of the lens 1052a). The second lens 1052b is located on the opposite side of the focal plane and captures light exiting the trapping area 1054 and focusses or collimates the light into a plurality of light beams that may be incident upon: a beam dump inside the chamber 1002 (not shown) or another chamber window 1060 that allows the light to escape the chamber 1002.

An expanded view 1056 of the focal plane in area 1054 is also shown in figure 4 wherein an array of optical trapping sites 1058 are shown that are created from the mirrors 1038 of the SLM 1036 reflecting portions of the light 1034.

Figure 4 further shows two atomic state actuators 1012a/b that take the form of lasers that output light for manipulating the states of the atoms trapped at the trapping sites 1058. In figure 4, actuator 1012a is a system comprising two (or more) lasers, each laser may output light at a different wavelength 1062a/b. Different wavelengths may match different atomic transitions of the atomic system (or 'ensemble') held in the chamber 1002, alternatively a photon from each of the different wavelengths 1062a/b may be used in two photon absorption process. Alternatively, the two atomic state actuators 1012a/b may output the same wavelength. In the alternative, a single atomic state actuator 1012a may be used.

The light from the actuator 1012a is incident upon a chamber window 1060, through which the light travels and is incident upon the second lens 1052b. The lens 1052b, in turn focusses the light onto the atoms in the trapping sites 1058. A further atomic state actuator 1012b is shown positioned, about the plan view of the chamber 1002, orthogonally to the first actuator 1012a. This second actuator 1012b may be substantially similar to the first actuator 1012a where a further chamber window 1064 allows light output from the second actuator 1012b into the chamber 1002. The second actuator 1012b may be used to help address and manipulate atoms, particularly when the system provides a 3D array of optical traps. The optical components for focussing light inside the chamber 1002 from the second actuator is not shown in figure 4.

It is to be understood that figure 4 and its accompanying description is an example of a setup for a neutral atom quantum computer. The atomic state actuators 1012 may be positioned in different locations, including inside or outside the chamber 1002 or part of the chamber 1002. There may also be one or a plurality of different actuators 1012. The actuators 1012 may be integrated or otherwise co-located with other electromagnetic sources such as the laser 1046 or laser system 1032. It is also to be understood that the quantum system 1030 may include other optical or electronic components and/or configurations to allow the neutral atoms to be addressed by the different electromagnetic sources.

Light, for example fluorescence, emitted by the trapped atoms may be output from the chamber 1002 through any of the windows 1050, 1064, 1060. In figure 4, the light 1064 emitted from the trapped atoms travelling out of the window 1050 is, prior to exiting window 1050, collimated by the first lens 1052a. This light 1064, once exited window 1050, is incident upon the dichroic mirror 1042. The dichroic mirror 1042 reflects the emitted light 1064 towards a camera 1066 (which is equivalent to the detector 1020 in figure 3). The camera 1066 may be an electron-multiplying charge-coupled-device (EMCCD) camera. The dichroic mirror 1042 may have an edge or pass-band characteristic filter response that substantially reflects emitted light 1064 but substantially transmits light 1034 and 1040.

Figure 4 is shown as a collection, or system, of separate components, including bulk-optic devices wherein light is propagated between components using free-space propagation. It should be appreciated that other versions of the quantum system set-up 1030 may be implemented using fibre-optics or integrated optic components.

The components of the quantum system 1030, such as, but not limited to, laser system 1032, atom positioner 1008, camera 1066, actuators 1012a/b may be controlled by a classical computer system running one or more pieces of software and/or providing manual user input through an interface to control these components. Details of classical computer system features are provided elsewhere herein.

Example of operating the quantum processor

There now follows an example of operating a quantum processor such as, but not limited to the set-up as shown in figure 4. The atoms in this example are rubidium atoms, however other atoms may be used.

The atoms in the chamber 1002 are initially not in an arrangement suitable for performing quantum computing operations. To get the atoms in an arrangement for quantum processing, a 3D MOT is initiated, as described above, wherein a cold ensemble of $10^6$ atoms with a $1mm^3$ volume is prepared inside the trapping area 1054. This array of atoms may be referred to as a 'register' and steps of locating atoms in the trapping sites may be referred to as 'register loading'. The optical tweezers using light 1044 isolate individual atoms in the ensemble. The trapping volume of a tweezer may be between 1-10$\mu m^3$ or generally in the order of a few $\mu m^3$. Such a volume may trap at most one atom at a time. The number and arrangement of tweezers may be in any 1D, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub-register atom arrangements are also possible.

To determine where the atoms are initially held in the register, the atoms are imaged by collecting their fluorescence on the camera 1066. From these one or more images a program run on a classical computer system may be used to determine the position of the initially occupied sites 1058. Additionally, or alternatively a user may provide input to determine such positions. When a classical computer is used, an algorithm may be used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 1048.

Optionally a further image may be acquired in a similar way as described above to check whether the sub-register formed has atoms in the predetermined positions. Furthermore, when any quantum processing is complete, the sub-register may be read out in a similar way using the camera 1066. The above process of setting up a sub register is optional; the use of the atoms in the register may be performed, in principle, without the need for setting up a sub register.

Rydberg entanglement

We now discuss, for neutral atom quantum computers the inter-atom interactions, hence entanglement between the qubits.

It is appreciated that in examples described elsewhere herein the quantum states of a neutral atom quantum computer can be represented by two Rydberg states of an atom, however the following general discussion of Rydberg states and entanglement is provided for context, particular where the method and system are implemented in a quantum gate-form as discussed elsewhere herein, wherein the Qubit would be encoded in two distinct hyperfine states of the atoms. The Rydberg level would then be used in a transient manner during entangling gates.

Neutral atoms in their electronic ground state can only interact significantly via contact physical collisions. Single atoms are typically separated by a few micrometres in the register and therefore do not naturally 'feel' each other, therefore they do not normally interact. EM pulses imparted on the qubits may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 1012a/b used to impart light at the wavelength needed for the Rydberg transition may be referred to as the Rydberg laser. The Rydberg laser and its output light may be referred to herein as the 'Rydberg channel'.

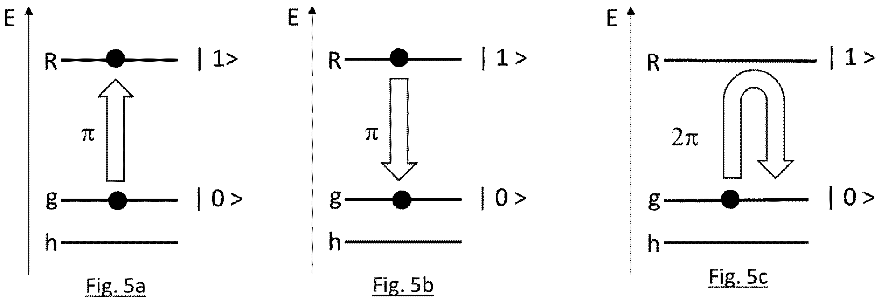

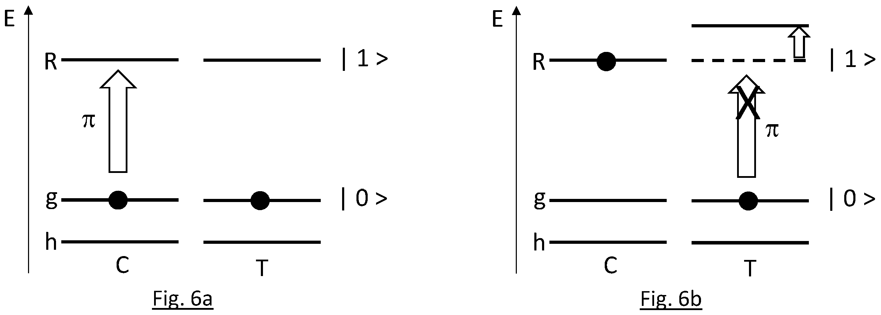

Figures 5a-5c schematically show three levels of the atomic system of the rubidium atoms used herein wherein: the energy levels 'g' and 'h' denote the hyperfine states wherein the state 'g' represents the |0 > qubit states respectively, whilst 'R' represents the Rydberg state which is the | 1 > qubit state of the atomic system. The examples in figures 5a-5c and 6a, 6b are used for illustrative purposes to explain the Rydberg blockading effect using different single pulses to transition the atom from a ground to a Rydberg state, however in an analogue system the EM signal inducing a blockade may be a series of EM pulses and/or a continuous EM signal spanning the duration of the quantum calculation before the qubit measurements are made.

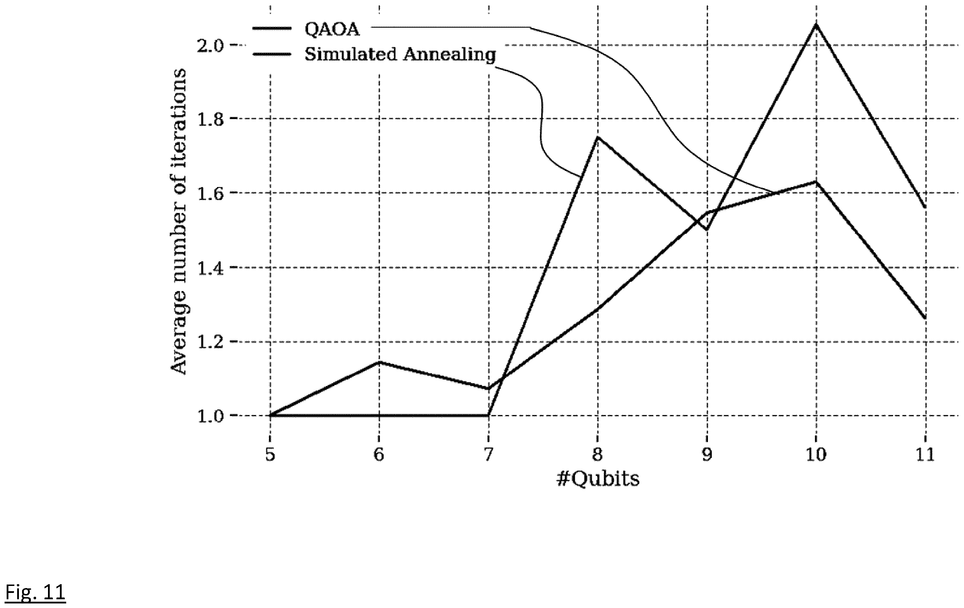

The label of '$\pi$' in figures 5a and 5b is shown when a single transition is made between the | 0 > and | 1 > state indicating that a $\pi$ change in $\theta$ has been imparted into the atomic system because of the overall transition. Similarly, when a laser field of sufficient duration and amplitude has been imparted onto the atom to transition it from the 'g' energy level up to the R energy level and then back to the g energy level (within the same control field input), this is labelled as '$2\pi$' indicating that a $2\pi$ change in $\theta$ (i.e., a full Bloch sphere rotation) has been imparted into the atomic system because of the overall transition. It is understood that the input control fields causing these transitions in figures 11a-c have a wavelength resonant with the |0 > to |1 > transition. Figure 5a shows the atomic transition from the g level to the R level with a $\pi$-pulse. Figure 5b shows the atomic transition from the R level to the g level with a $\pi$-pulse. Figure 5c shows the atomic transition from the g level to the R level and back to the g level again with a $2\pi$-pulse.

An example of the Rydberg blockade is the situation where two neighbouring atoms are both in the 10 > state, i.e., both at the g energy level as shown in figure 6a. In figure 6a, the above energy levels are shown for two identical rubidium atoms wherein, for this explanation, the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a $\pi$-pulse as shown in figure 6a. At a time after the C atom has transitioned to the R state, the equivalent R state energy level for the T atom is raised above its normal energy level due to the effect of the C atom being in a higher energy state. If a $\pi$-pulse is then introduced to the T atom whilst this 'blockade' is in effect, as shown in figure 6b, the $\pi$-pulse will not transition the T atom from the g energy level to the R energy level due to the frequency of the laser being detuned from the frequency difference between the Rydberg-energy level and the g-energy level. As such, the T atom remain in the g state. The Rydberg blockade may therefore be used to enable the state of one qubit (C atom) to affect the state of another qubit (T atom). The cross over the arrow in figure 6b, indicates that the transition did not occur.

Rydberg atoms strongly interact in a way that can be mapped into spin Hamiltonians. Depending on the Rydberg states that are involved in the process, the spins experience different types of interactions that translate into different Hamiltonians. It could be, but is not limited to, dipole-dipole or Van der Waals interaction. When the $|0>$ state is one of the ground states of and the $|1>$ is a Rydberg state, this may map to the Ising model which uses discrete variables representing magnetic dipole moments of atomic "spins" that can be in one of two states. The Hamiltonian of an atomic system using ground-Rydberg states for the different spins may be represented by equation 7.

$$\mathcal{H}(t) = \frac{\hbar}{2}\Omega(t)\sum_j \sigma_j^x - \hbar\delta(t)\sum_j n_j + \sum_{i \neq j}\frac{C_6}{r_{ij}^6}n_i n_j$$

[Equ. 7]

In this equation, the Rydberg state occupancy is: $n_j = (1 + \sigma_j^z)/2$ wherein $\sigma^x$ and $\sigma^z$ are the Pauli matrices of the spin 'j'. The Rabi frequency is $\Omega(t)$ and can be changed by changing the intensity-time profile of the input EM radiation. The detuning is $\delta(t)$ and can be changed by changing the frequency (i.e., wavelength)-time profile of the input EM radiation.

The first two terms are induced by the laser that couples the qubit states and relate to an effective magnetic field, with transverse B component proportional to $\Omega(t)$ and the longitudinal B component proportional to $-\delta(t)$. These two terms describe how individual spins would precess in the presence of an external magnetic field.

The third term in equation 7 relates to the interactions between individual spins. More specifically, it corresponds to an energy penalty that two qubits experience if they are both in the Rydberg states at the same time. The coupling between two spins I and j is of van der Waals type and depends on the inverse of the distance between them $r_{ij}$ to the power of 6, and on a coefficient C6 relative to the Rydberg state.

The system may use other spin states associated with Rydberg states. Instead of using a ground and Rydberg state, the system may use two Rydberg states that are dipole coupled. These states may be $|nS>$ and $|nP>$. Such a system may be described by a different Hamiltonian, namely the XY Hamiltonian represented by Equation 8.

$$\mathcal{H}(t) = \frac{\hbar}{2}\Omega(t)\sum_j \sigma_j^x - \frac{\hbar}{2}\delta(t)\sum_j \sigma_j^z + 2\sum_{i \neq j}\frac{C_3}{r_{ij}^3}\left(\sigma_i^x\sigma_j^x + \sigma_i^y\sigma_j^y\right)$$

[Equ. 8]

The first two terms in equation 8 are typically induced by a microwave field.

The third term in equation 8 corresponds to a coherent exchange between the spin states, transforming the pair state $|01>$ to $|10>$.

Other Hamiltonians may be used such as the XXZ model or the Hamiltonian present elsewhere herein. Examples of a NAQC using Rydberg atoms in optical offer a favourable quality factor $Q \sim 10^2$, given by the ratio of coherent evolution rate over the decoherence rate.

Further example

The following is a non-limiting example of implementing the method. This example uses Benders decomposition, however other decompositions may be used. This method uses a neutral atom quantum computer only be means of example. Options for varying the method provided elsewhere herein are applicable to this example. Furthermore, details associated with this example may be used with other examples of the methods described herein. Such details include, but are not limited to: problems; variables; parameters; steps to generate problems and versions of problems; details of constraints and steps to generate constraints; type and details of a quantum computer used for the method; details of the operation of the quantum computer, type and details of a classical computer used with the method.

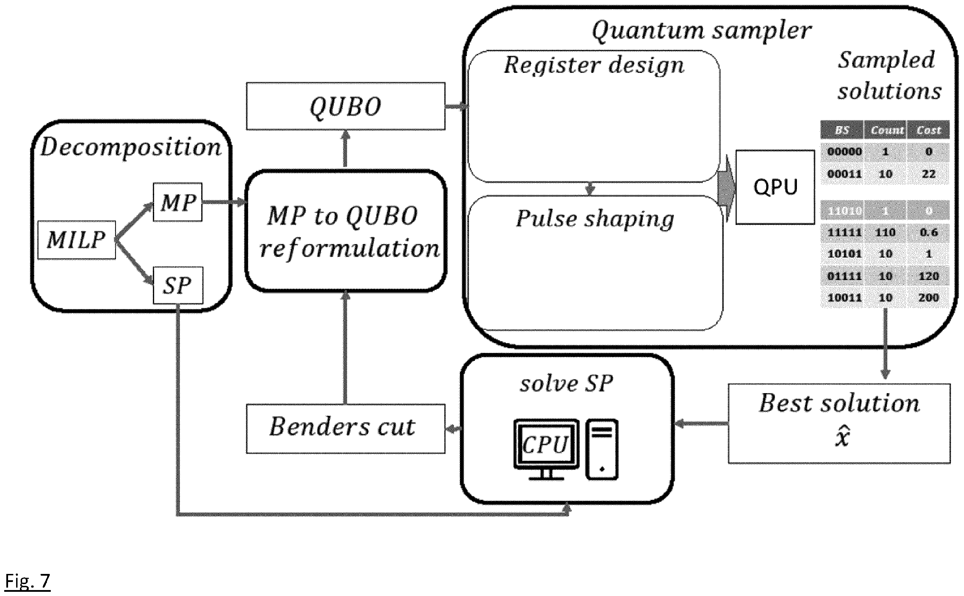

In summary, this further example provides a hybrid Benders based Solver that provides an approach for solving arbitrary MILPs, although MINLPs may be determined by a similar method. Initially, the MILP is decomposed into a Master Problem (MP) and a Subproblem (SP). This is followed by a preprocessing stage, where the bounds for real variables in the MILP-formulated MP are established, optimizing the number of qubits needed for their representation. This step is optional but may be useful for quantum computational efficiency. The process then progresses to the QUBO reformulation, where the MP is converted into a QUBO, a mathematical representation of the original problem that is suitable for quantum processing. The benders algorithm is applied subsequently, alternating between solving the MP on Quantum Processing Unit (QPU) and the SP on classical Computer Processing Unit (CPU). As discussed elsewhere, the SP may be solved using a quantum computer as well. This iterative cycle generates an optimal or near-optimal solution for the original MILP. In order to efficiently handle different MILP scenarios, the solver's workflow may be designed in a such way that it is fully automated. Figure 7 shows a flow chart exemplifying this summary.

Technically, Benders Decomposition provides a method to address MILP challenges by decomposing them into two components, computationally easier to manage: the master problem and the subproblem. By setting aside the more complex integer variables, benders decomposition yields the master problem-a less complex variant of the original problem, with certain constraints relegated to the subproblem. Fixing the integer variables, from the master problem, turns the subproblem into a Linear Program (LP) that can be easily solved using conventional optimization solvers. The approach in this example may involve iteratively solving the master problem to determine a solution for the integer variables, and then applying this solution to the subproblem to determine its optimal solution. As discussed in other examples and below, the solution to the MP may-also output a solution to a further variable used to compare against the solution of the SP. Comparing this value to the optimal objective of the SP determines if or not improvements are needed. In this case, the subproblem generates a Benders' cut-a generated linear constraint derived from the dual solution of the subproblem. This cut is integrated into the master problem for the subsequent iteration. In principle, this example may only require one version of the MP and SP to yield a solution to the MIP. The process may repeat and progressively refine the solution space, until the optimal solution is found.

In more detail, Benders Decomposition works by separating the MILP (or MIP) known as the original problem (OP) into a master problem (MP), which deals with discrete variables, and a subproblem (SP), which focuses on the remaining continuous variables. The process, in this example, is typically iterative: it starts by considering a restricted version of the MP, refereed as to RMP, and alternates between solving the RMP and the SP. The SP works as a cut generator by providing to the RMP Benders' cuts, to progressively refine the solution until proving optimality.

To perform Benders' decomposition, in this example, the OP is reformulated into an equivalent MILP, drawing upon the principles of duality in linear optimization. The reformulation process involves the following. Consider an OP formulated as a MILP:

$$\max_{x,y} c^T x + h^T y$$

[Equ. 9]

such that:

$$Ax + Gy \leq b,$$

[Equ. 10]

$$Bx \leq b',$$

[Equ. 11]

$$x \in \{0,1\}^n$$

[Equ. 12]

$$y \in \mathbb{R}^p_+$$

[Equ. 13]

In equations 9-13, the decision variables are represented by vectors x and y. Equation 12 denotes one or more binary variables, of sizes n, and equation 13 denotes one or more non-negative continuous variables, of sizes p. Other variables may be used including non-binary discrete variables, or any other type on non-continuous variable. If such variables appear in the OP, the latter could be reformulated using a binary encoding of discrete variables. This approach would reduce the OP into the same formulation given by equations 9-13, introducing additional binary variables for the encoding.

The OP in this example maximises $c^T x + h^T y$, wherein the superscript 'T' denotes a transpose of vectors 'c' and 'h'.

The terms 'c' and 'h' are coefficient vectors and represent input parameters that are typically data values associated with the OP. The OP may minimise, instead of maximise the function shown in Equation 9. Where the OP is a minimisation problem, this may be turned into a maximisation problem through a relation such as the substitution: max $\{f(x) : x \in X\}$ = -min$\{-f(x) \; x \in X\}$.

Equation 10 is a constraint that links the binary variables to the continuous variables. The coefficient matrix in the constraints, having m1 rows and n columns, related to x is denoted by A. The coefficient matrix, having m1 rows and p columns, in the constraints related to y is denoted by G. The right-hand side of the constraints is the vector b of size m1 (number of constraints).

Equation 11 is a further constraint relating only to the binary variables.

The coefficient matrix, B, in the constraints has m2 rows and n columns. The right-hand side of the constraints is the vector b' of size m1 (number of constraints).

Following the principles of standard Benders decomposition, the linking constraint in equation 10 is included in the SP, with the objective function $h^T y$. On the other hand, the constraint in equation 11 is incorporated into the RMP.

For a solution $\hat{x}$ from the RMP,-the SP is equivalent to the following Linear Program (LP):

$$\max_{y} h^T y$$

[Equ. 14]

such that:

$$A\hat{x} + Gy \leq b,$$

[Equ. 15]

$$y \in \mathbb{R}_+^p$$

[Equ. 16]

Its dual, represented as:

$$\min_{\mu} f(\hat{x}) = (b - A\hat{x})^T \mu$$

[Equ. 17]

Such that

$$G^T \mu \geq h$$

[Equ. 18]

$$\mu \in \mathbb{R}_+^{m1}$$

[Equ. 19]

By strong duality theory, at optimality we have equation 4 as presented previously.

In Linear Programming (LP), the feasible region formed by linear constraints may be represented as a polyhedron. The vertices, corresponding to potential optimal solutions are the extreme points of this polyhedron; if an optimal solution exists, it is found at one of these vertices. In unbounded LPs, Extreme rays, emerging from the polyhedron, point to directions where an unbounded growth for the objective function is defined, showing where the objective can increase indefinitely while respecting the constraints. The feasible solution space of an LP can be characterized by a combination of its extreme points and extreme rays.

Using this for the dual allows the reformulation of the OP into an equivalent MILP as follows:

$$\max_{x,\phi} c^T x + \phi$$

[Equ. 20]

such that

$$(b - Ax)^T \mu_0 \geq \phi, \qquad \forall_0 \in O$$

[Equ. 21]

$$(b - Ax)^T r_f \geq 0, \qquad \forall_f \in F$$

[Equ. 22]

$$Bx \leq b',$$

[Equ. 23]

$$x \in \{0,1\}^n$$

[Equ. 24]

$$\phi \in \mathbb{R}$$

[Equ. 25]

In this reformulated OP, only one continuous variable $\phi$ is used. The continuous variable $\phi$ is a newly introduced variable not initially defined in the MILP. The remaining variables are the binary variables x of the original MILP.

Constraints 21 and 22 represent the Benders' optimality cuts and feasibility cuts, respectively. Here, the sets O and F are the extreme points and extreme rays of the dual, respectively. The vectors $\mu_o$ are for extreme points and $r_f$ for extreme rays are instrumental in constructing the Benders' cuts. They can be obtained through classical solvers, such as, but not limited to ILOG CPLEX. It is worth noting that sets O and F can be exponential in number. However, the method may efficiently find an optimal solution using a selected subset of these sets.

The approach starts by considering a RMP with optimality and feasibility cuts, O and F, initially empty, O = F = empty set.

As the procedure advances, both optimality and feasibility cuts are added progressively. The optimality cuts help in guiding the solutions of the master problem towards the optimal solution of the original problem (OP), accomplished by integrating $\phi$. At each iteration, this variable is constrained by Equation 21 to be no greater than the objective value of the extreme point in the dual of the subproblem and the objective of maximizing $\phi$ ensures its alignment with the optimal objective values in the dual. Meanwhile, feasibility cuts serve the essential function of eliminating infeasible solutions from the master problem's solution space, acting as a filter to maintain solution consistency within the defined constraints.

The resolution of the RMP presents considerable complexity, mainly attributed to its binary variables. This complexity becomes more critical as the solution process progresses, particularly with the incorporation of benders' cuts. Consequently, the RMP frequently becomes a computational bottleneck. The use of a quantum computer helps in this regard, in particular, with neutral-atom-based quantum computers, in that it effectively addresses the challenges posed by the master problem.

To utilise a quantum computer the method converts the master problem into a Quadratic Unconstrained Binary Optimization (QUBO) model, which is suited for quantum computing. Other models implementing binary variables may also be used, including, but not limited to, a HUBO.

A QUBO problem can be formulated as follows:

$$min\{z^T Q z | z \epsilon \{0,1\}^t\}$$

[Equ. 26]

where Q is a symmetric matrix and z is a binary vector. The objective of this optimization problem is to find the binary output vector z * that minimizes the function $z^T Q z$ over all binary vectors. When leveraging Quantum Processing Units (QPUs) for optimizing the RMP, the method may transform the RMP, originally represented as a MILP, into a QUBO format. Underneath details the methodology for this reformulation. Other reformulation methods may be used.

The objective function in the master problem, contains a linear term and a continuous variable, given by $c^T x + \varphi$. The linear component $c^T x$, which exclusively involves binary variables, is directly adaptable to a QUBO. This is achieved by employing the diagonal matrix diag(c), with the vector c populating its diagonal, thereby transforming $c^T x$ into:

$$x^T diag(c) x$$

[Equ. 27]

The continuous variable $\phi$ can be binary encoded using a binary vector w of length L, formulated as:

$$\bar{\phi} = \sum_{i=0}^{P} 2^i w_i + \sum_{j=1}^{D} 2^{-j} w_{P+j} - \sum_{k=1}^{N} 2^{k-1} w_{P+D+k}$$

[Equ. 28]

where P represents the number of bits for the positive integer part of $\varphi$, is given by $P = \lfloor log2(\varphi_{max}) \rfloor + 1$, with $\phi_{max}$ being an upper bound of f. For the fractional part, the number of bits D can be obtained based on a desired precision $\varepsilon$, calculated as $D = \lfloor log2(\epsilon) \rfloor + 1$. N = P denotes the number of bits for the negative integer part of $\phi$, leading to a total length L = P+D+N for the vector w. The values of P, D, and N may affect both the numerical precision of $\phi$ and the quantum resource requirements in terms of the number of qubits needed.

There now follows details about constraint reformulation. The reformulation of the MP constraints, may involve integrating slack variables, a technique in classical optimization for transforming inequalities into equalities. The inequalities $Bx \leq b'$ are first converted into the equalities $Bx + s_m - b' = 0$, where $s_m$ is a vector of continuous positive variables. A quadratic penalty term $\pi_1(Bx+s_m-b')^2$, with $\pi_1$ is the penalty coefficient, is then added to the QUBO. Minimizing this penalty to zero ensures that the constraints $Bx \leq b'$ are satisfied. Otherwise, a cost on any deviation from zero, unsatisfying the constraint, is added. Afterwards, the slack variables $s_m$ undergoes a binary encoding yielding:

$$s_m = \sum_{i=0}^{Q1-1} 2^i v_i^m + \sum_{j=1}^{R1} 2^{-j} v_{Q1+j}^m$$

[Equ. 29]

Here, $v^m$ denotes a binary vector with a length of Q1+R1. Q1 represents the number of bits allocated for the

integer part of $s_m$, while R1 corresponds to the number of bits for its fractional part. The value of Q1 is determined as $\lfloor \log 2(s_{max}) \rfloor + 1$, where $s_{max}$ is the upper limit for $s_m$.

The QUBO reformulation of constraint 11 is:

$$\pi_1 \left( Bx + \sum_{l=0}^{Q_1-1} 2^i v_i^m + \sum_{j=1}^{R_1} 2^{-j} v_{Q1+j}^m - b \right)^2$$

[Equ. 30]

For the Optimality and feasibility cuts similar steps are followed. Firstly, let $v^o$ and $v^f$ denote respectively binary vectors of lengths Q2 + R2 and Q3 + R3. Here, Q2 and Q3 specify the number of bits allocated for the slack variables so and sf used in reformulating the optimally and feasibility cuts in equations 21 and 22. The terms R2 and R3 correspond to the number of bits used for the fractional part of $s_o$ and $s_f$, respectively, and can be obtained based on a desired precision. We have that:

$$s_0 = \sum_{l=0}^{Q2-1} 2^l v_l^o + \sum_{m=1}^{R2} 2^{-m} v_{Q2+m}^o$$

[Equ. 31]

$$s_f = \sum_{l=0}^{Q3-1} 2^l v_l^f + \sum_{m=1}^{R3} 2^{-m} v_{Q3+m}^f$$

[Equ. 32]

This yields the penalty terms:

$$\pi_2 \left( \bar{\phi} + \mu_0^T Ax + \sum_{l=0}^{Q_2-1} 2^l v_l^0 + \sum_{m=1}^{R_2} 2^{-m} v_{R2+m}^0 - b^T \mu_0 \right)^2$$

[Equ. 33]

$$\pi_3 \left( r_f^T Ax + \sum_{l=0}^{Q_3-1} 2^l v_l^f + \sum_{m=1}^{R_3} 2^{-m} v_{Q3+m}^f - b^T r_j \right)^2$$

[Equ. 34]

Finally, the QUBO is given by the sum of the terms (27) - (34).

The efficiency of the quantum algorithm is related to the number of bits used for binary encoding of real variables in the reformulation process. This aspect is due to two primary factors: numerical precision and the management of qubits.

Regarding Numerical Precision and Bit Count. An accurate estimation of bit count is desirable to avoid numerical precision issues. Inaccuracies in this regard can lead to algorithms terminating prematurely or exceeding their intended runtime. This directly impacts the quality of solutions, often resulting in infeasible or suboptimal outcomes. Therefore, this example may strike a balance between precision and computational feasibility. This may be important in the quantum context, where QUBO is a preferred approach for solving optimization problems.

Regarding Penalty Values and Algorithmic Guidance. The selection and tuning of penalty values in the QUBO model may be required. These values guide the quantum algorithm towards optimal or near-optimal solutions, particularly in solving complex optimization tasks. Precise control over penalty parameters may sometimes significantly influence the solution quality, and thus may be a preferred aspect of effective quantum computation.

Regarding Qubit Limitations and Problem Scaling. Another consideration may be the limitation imposed by the number of available qubits in the quantum computing hardware. For instance, the quadratization of variables and constraints in the Benders decomposition process (as seen in equations 20-25) typically requires additional qubits. The requirement for qubits may increase as the computation progresses, particularly with the generation of Benders' cuts. Accurately estimating the upper bounds, such as that of $\Phi$, may determine the number of qubits needed. Understanding the relationship between qubit availability and computational needs is preferable for effective quantum computation.

Regarding Importance of Accurate Binary Representation. Accurate binary representation of variables, especially slack variables involved in the computational process, may be advantageous in maintaining the precision and efficiency of quantum computations. Ensuring that these representations are as precise as possible is preferred for obtaining reliable and useful solutions from quantum algorithms.

The number of bits used for the binary encoding of real variables in the reformulation process is advantageous for the efficiency of quantum computing algorithms. This may be due to at least two reasons. The first one is the numerical precision; an inaccurate estimation of this bit count can lead to significant numerical precision issues. Such errors may cause the algorithm to terminate prematurely or run longer than necessary, resulting in the generation of infeasible or suboptimal solutions. Moreover, the selection of penalty values in the QUBO model may be important. Proper tuning of these penalties is advantageous for steering the quantum algorithm towards optimal or near-optimal solutions. In the quantum realm, where QUBO algorithms are employed for complex optimization tasks, precise control over these parameters can significantly influence the quality and viability of the solutions obtained.

In the context of quantum algorithms, where QUBO forms the core of solving optimization problems, maintaining a balance between precision and computational feasibility is advantageous. This is limited by the number of available qubits in current quantum computing hardware. The quadratization of the variable $\Phi$ as well as the quadratization of the constraints 20-25 involved in the Benders decomposition process may require additional qubits, which may increase as the execution progresses, particularly due to the generation of Benders' cuts. It may be preferred to, optionally, accurately estimating the upper bounds of $\Phi$, as this influences the number of required qubits, making it essential for effective quantum computation.

Once we have the QUBO at hand, the focus shifts to the register embedding. The process of configuring Rydberg atoms in quantum devices, may be governed by an interaction matrix U, formulated as:

$$U = \begin{bmatrix} \frac{C6}{r_{61}} & \frac{C6}{r_{62}} & \cdots & \frac{C6}{r_{6n}} \\ \frac{C6}{r_{61}} & \frac{C6}{r_{62}} & \cdots & \frac{C6}{r_{6n}} \\ \vdots & \vdots & \ddots & \vdots \\ \frac{C6}{r_{6n1}} & \frac{C6}{r_{6n2}} & \cdots & \frac{C6}{r_{6nn}} \end{bmatrix}$$

[Equ. 35]

Here, C6 is a material-dependent constant, and $r_{ij}$ denotes the Euclidean distance between atoms i and j. The aim is to align U with the QUBO matrix Q, derived from the quadratic problem as previously discussed. This alignment is achieved by optimizing atom positions to minimize the dissimilarity between Q and U, expressed as:

$$\min_{r_{ij}} \|Q - U\|$$

[Equ. 36]

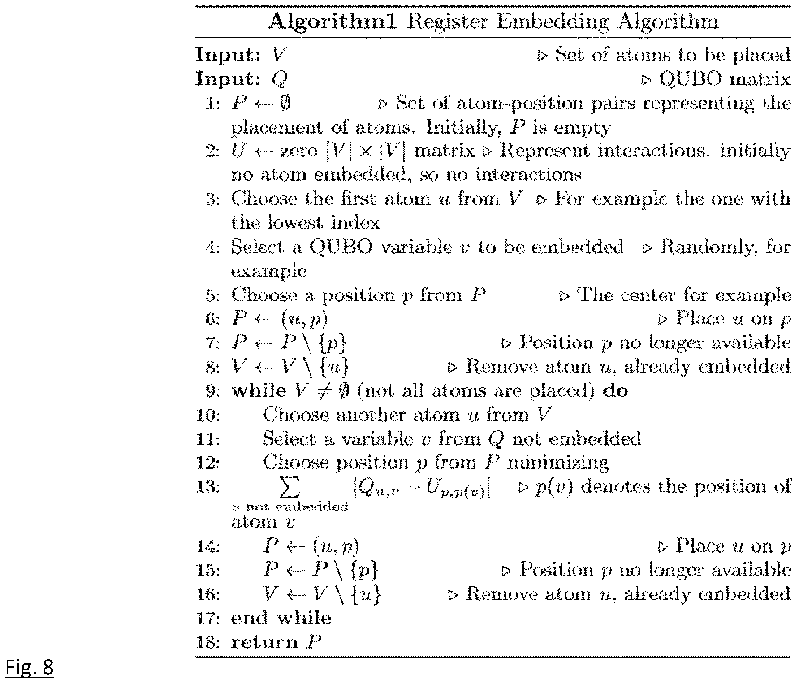

The optimization may optionally employ a greedy algorithm. It begins by placing each atom node in the centre of the chamber. Subsequent nodes are added iteratively, selecting at each step the node that exhibits the most conflicts with already placed ones. Finally, the configuration that results in the least constraint violations is chosen. An example of this algorithm is in Algorithm 1 as shown in figure 8.

Neutral atom Quantum Processing Units (QPUs), which typically utilize alkali metal atoms such as Rubidium, function by inducing transitions between ground states |gi) and Rydberg states |ri) via lasers or microwaves. The effective Hamiltonian governing the atomic interactions at time t can be expressed as:

$$H(t) = \Omega(t) \sum_{u=1}^{|V|} \hat{\sigma}_x^u - \Delta(t) \sum_{u=1}^{|V|} \hat{n}_u + \sum_{u<v}^{|V|} U_{uv} \hat{n}_u \hat{n}_v$$

[Equ. 37]

Here, $\Omega(t)$ represents the Rabi frequency, $\Delta(t)$ denotes the detuning, and $U_{uv}$, proportional to $|r_u - r_v|$-6, indicates the interaction strength contingent on the spatial separation of atoms u and v. In this example, the Quantum Approximate Optimization Algorithm (QAOA) is implemented, leveraging a strategy of alternating applications of two Hamiltonians: a problem Hamiltonian HQ and a mixing Hamiltonian HM. The modulation of these Hamiltonians is regulated by the parameters $\Omega(t)$ and $\Delta(t)$, corresponding to the amplitude and detuning of the laser system. This method may utilise EM pulse shaping for precision in the control of these parameters, which is advantageous for the accurate evolution of quantum states.

EM Pulse shaping within neutral atom QPUs entails the temporal modulation of laser intensity and frequency. This granular control is used for emulating the Hamiltonian dynamics required by QAOA, facilitating the optimization of quantum processes for intricate problem-solving scenarios.

The QAOA framework on neutral atom QPUs may encompass several phases:

1. Initialization of all atoms in the ground state of the ground-Rydberg basis.
2. Sequential application of non-commutative Hamiltonians: the mixing Hamiltonian HM and the problem Hamiltonian $H_Q$.
3. Parameterization of HM and HQ through specific settings of $\Omega(t)$ and $\Delta(t)$, enabling the alternation between Hamiltonians.
4. Use of a classical optimizer to iteratively refine the parameters, aiming to optimize the algorithm's efficacy relative to the solution accuracy and computational resource constraints.

The circuit depth within the QAOA paradigm may strike a balance between computational practicability and the precision of solutions. While low-depth circuits are often favoured due to their lower error rates and expedited computation, certain complex optimization challenges prefer deeper circuits for a comprehensive exploration of the solution space. The depth of the circuit has a direct correlation with the algorithm's capability to explore and optimize the solution space. Increasing the depth, albeit augmenting computational demands, may be required for attaining enhanced solution accuracy in complex scenarios.

The following discusses a proof of concept (PoC) of the method.

In the PoC, the MILP associated with the problem is given as follows:

$$\max \quad -15x_1 - 10x_2 + 8y_1 + 9y_2 + 5y_3 + 6y_4$$
$$y_1 + \ y_3 \leq 1$$
$$y_1 + y_4 \leq 1,$$
$$y_2 + \ y_3 \leq 1$$
$$y_2 + y_4 \leq 1,$$
$$-x_1 - x_2 \leq -1,$$
$$-x_1 + y_1 \leq 0,$$
$$-x_1 + y_2 \leq 0,$$
$$-x_2 + y_3 \leq 0,$$
$$-x_2 + y_4 \leq 0,$$
$$x_1, x_2 \in \{0, 1\},$$
$$y_1, y_2, y_3, y_4 \geq 0.$$

The matrix description of the MILP is:

$$A = \begin{bmatrix} 0 & 0 \\ 0 & 0 \\ 0 & 0 \\ 0 & 0 \\ -1 & 0 \\ -1 & 0 \\ 0 & -1 \\ 0 & -1 \end{bmatrix}, \quad G = \begin{bmatrix} 1 & 0 & 1 & 0 \\ 1 & 0 & 0 & 1 \\ 0 & 1 & 1 & 0 \\ 0 & 1 & 0 & 1 \\ 1 & 0 & 0 & 0 \\ 0 & 1 & 0 & 0 \\ 0 & 0 & 1 & 0 \\ 0 & 0 & 0 & 1 \end{bmatrix}, \quad b = \begin{bmatrix} 1 \\ 1 \\ 1 \\ 1 \\ 0 \\ 0 \\ 0 \\ 0 \end{bmatrix},$$

$$B = \begin{bmatrix} -1 & -1 \end{bmatrix}, \quad b' = \begin{bmatrix} -1 \end{bmatrix},$$

$$c^T = \begin{bmatrix} -15 & -10 \end{bmatrix}, \quad h^T = \begin{bmatrix} 8 & 9 & 5 & 6 \end{bmatrix},$$

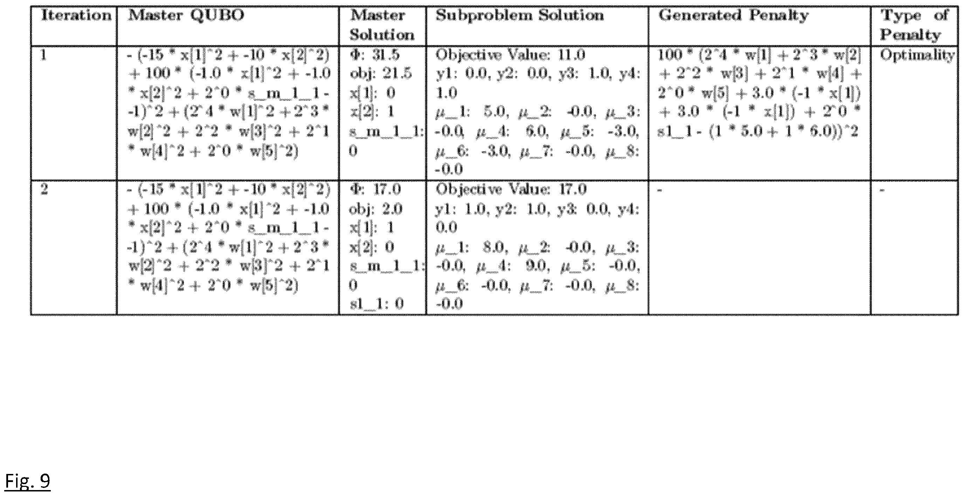

The table shown in figure 9 outlines the execution state of the Benders algorithm applied to the PoC example described above.

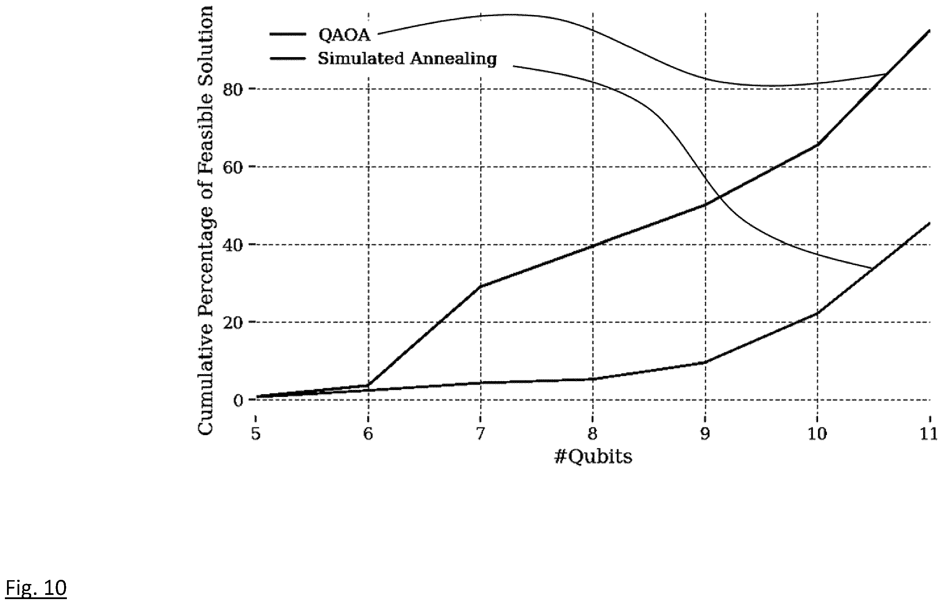

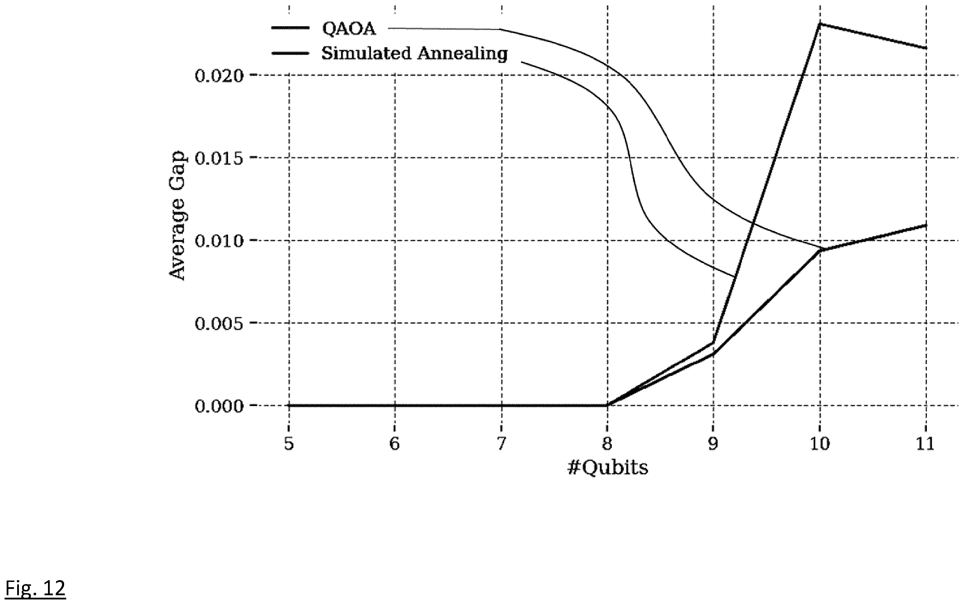

Figure 10 shows the percentage of feasible solutions per number of qubits for the PoC. Figure 11 shows the average number of Benders decomposition iterations for the PoC. Figure 12 shows the average gap per number of qubits for the PoC. In each of figures 10-12, the present method using a QAOA is compared to simulated annealing.

The instances generation process of the experimentation on the PoC covers 450 MILPs randomly generated. We vary the number of variables and constraints, as well as the structure and coefficients of the constraint matrices as the following:

A) Variables x and y: The number of binary variables x range from 2 to 5, while the number continuous variables y vary from 2 to 10, allowing exploration of different problem scales while respecting the capacity of the simulation in terms of number of qubits.

B) Constraint Matrices A, G and Vector b: Matrix A is populated with non-positive random values, and matrix G with non-negative values. This yields positive slack variables, thereby reducing the number of required qubits in optimality and feasibility cuts. The vector b is randomly generated with non-negative random values. It sets the bounds for each constraint. These parameters define the set of constraints (equation 10) with a number ranging from 5 to 14.

C) Matrix B and Vector b': Matrix B consists of a single row filled with ones, and vector b' is a random positive number strictly less than the size of x, adding a special constraint that interdicts choosing the solution where all the x variables are equal to 1. These parameters are related to constraints from Equation 11. In our tests, we consider only one constraint.

D) Coefficients c and h: These are randomly generated vectors with non-negative random values, contributing to the variability in the objective function.

The randomness in these parameters generates various scenarios, ensuring that the tests cover a broad spectrum of instances. This allows drawing solid conclusions on the effectiveness of the algorithm of the PoC. The evaluation of the algorithm's performance is based on three key metrics:

E) Percentage of Feasible Instances: This metric evaluates the algorithm's ability to find feasible solutions across the tested instances.

F) Gap to Optimality: This measures the quality of the solution obtained by the algorithm. The gap is defined as: Gap = [obj(algo)-obj(opt)]/[obj(opt)], representing the distance of the solution provided by the algorithm from the optimal solution. The optimal solution is computed by considering the original problem in its compact formulation before being reformulated for a Benders decomposition.

G) Number of Iterations: This serves as an indicator of the time and energy consumption of the algorithm.

For the computational implementation and analysis of the generated MILP instances, the programming is conducted in Python. The quantum pulses are simulated using a program which is used for designing and emulating quantum protocols on neutral atom devices. The QAOA algorithm resolution is conducted by scikit-optimize, a Python library for optimization that is particularly well-suited for quantum algorithm parameter tuning. Finally, the compact formulation of the original problem was solved to optimality using the CPLEX solver, a high-performance mathematical programming solver.

The PoC algorithm was benchmark with a fully classical Benders algorithm where we solve the MP using Simulated Annealing. It is important to note that the PoC tests limits the number of qubits to 11, a threshold set by the simulation constraints.

The graph in Figure 10 illustrates the comparative performance of the hybrid Benders with QAOA and classical Benders using Simulated Annealing in terms of the cumulative percentage of feasible solutions with respect to the number of qubits. It is evident that QAOA surpasses Simulated Annealing consistently throughout the observed qubit range. Notably, QAOA demonstrates a pronounced increase in the number of feasible solutions as the qubit count increases, indicative of its superior utilization of computational resources. In contrast, Simulated Annealing shows a more moderate progression.

Figure 12 shows the average gap to optimality for both hybrid Benders with QAOA and fully classical Benders with Simulated Annealing in function of the number of qubits. The gap to optimality serves as a measure of solution quality. Here, a smaller gap indicative of a solution that is nearer to the optimal. The results presented here were conducted on MILPs where both methods, QAOA and Simulated Annealing, provided feasible solutions (thus, on the 45% of feasible MILPs given by Simulated Annealing). This ensures the fact that the gap is defined for both QAOA and Simulated Annealing. It can be seen that overall, both methods deliver solutions of good quality. The maximum average gap is attributed to Simulated Annealing and is equal to 2.3%. Nonetheless, observations indicate that QAOA maintains a relatively stable average gap, suggesting a robust ability to generate solutions close to the optimal across different qubit counts. Conversely, Simulated Annealing exhibits a comparable performance at lower qubit counts but deteriorates as the count becomes greater than 10. This performance degradation highlights potential scalability issues with Simulated Annealing when faced with increased problem complexity, represented by higher qubit counts, and consequently the potential ability of the PoC algorithm to produce a high quality solutions when scaling-up.

Figure 11 presents the average number of iterations for the hybrid Benders with QAOA and the fully classical Benders with Simulated Annealing as a function of the number of qubits. Iterations reflect the computational effort and, by extension, time and energy expenditure of the algorithms. Both algorithms show an increase in iterations with more qubits, aligning with the complexity generated by the number of qubits. Simulated Annealing count increases at 10 qubits, indicating possible inefficiencies at this problem size. In contrast, QAOA displays a moderate increase, showing a more stable scaling performance. This is particularly remarkable at 11 qubits where the number of iterations decreases.

In conclusion, the numerical results for the PoC, on this type of MILPs, show the efficiency of our hybrid Benders approach with QAOA in comparison to the classical Benders method with Simulated Annealing. The results affirm that QAOA not only consistently generates a higher percentage of feasible solutions for various qubit counts but also maintains a closer distance to optimal solutions. Moreover, QAOA shows a more stable performance with respect to the number of iterations, especially with a larger number of qubits. These results show the potential of QAOA to efficiently handle larger and more complex problems, even within the current limitations of quantum computational resources.

Options for Classical computers for use with the methods and systems presented herein

Some portions of the above description present the features of the invention in terms of operations performed by a classical computer. These feature descriptions may be in the form of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, the reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "identifying" or "determining" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and not mental steps performed by a human. Similarly, all of the types of data described and claimed may be stored in a computer readable storage medium operated by a computer system, and are not simply disembodied abstract ideas.

The method/system may also relate to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The classical computer(s) may comprise controllers. Any controller(s) may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g., flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

**Claims**

1.  A computer implemented method (2) for determining a solution to a Master Problem (4), MP, the MP derived from a Mixed-Integer Program, MIP (6), problem and associated with a Sub-Problem (8), SP;

    the MIP (6) problem for providing a solution to:

a first group (x) of one or more integer variables (x1, x2, xn); and,
a second group (y) of one or more first continuous variables (y1, y2, yn);

the MP (4) for outputting a solution for:

the group (x) of one or more respective integer variables (x1, x2, xn); and,
a second continuous variable ($\phi$);

the SP (8), comprising:

a primal problem (10) comprising the group (y) of one or more first continuous variables (y1, y2, yn); and,
a dual problem (12) associated with the primal problem (10);

the method comprising:

I) determining, using a quantum computer (14), a solution (s1) to a first version (MP1) of the MP; the first version of the MP comprising at least a first initial constraint (ci1); the solution to the first version of the MP comprising:

i) one or more first values ($\hat{x}$) for the group (x) of one or more respective integer variables (x1, x2, xn); and,
ii) a second value (v) for the second continuous variable ($\phi$);

II) running the SP, using the one or more first values ($\hat{x}$), to determine either:

a third value ($\hat{\mu}$), corresponding to the dual problem, for a solution for the SP;
a fourth value (r) corresponding to an extreme ray;

III) generating, using the third value or fourth value, a further constraint (c1) for a second version of the MP (MP2),
IV) generating the second version of the MP (MP2) by replacing the first initial constraint (ci1) with the further constraint;
V) determining, using the quantum computer (14), a further solution (s2) to the second version of the MP (MP2).

2. The method as claimed in Claim 1 wherein the determining of the third value ($\hat{\mu}$) corresponds to the running of the SP finding at least one feasible solution.

3. The method as claimed in Claims 1 or 2 wherein the solution to the SP is an optimal solution.

4. The method as claimed in any preceding Claim wherein the determining of the fourth value (r) corresponds to the running of the SP finding no feasible solutions.

5. The method as claimed in any preceding Claim wherein:

the MP (4) is for outputting a second continuous variable ($\phi$);
the solution to the first version of the MP comprises a further second value (v) for the second continuous variable ($\phi$).

6. The method as claimed in claim 5 wherein generating the further constraint comprising the third value ($\hat{\mu}$) comprises comparing the solution to the dual problem output by the SP to the second value (v) for the second continuous variable ($\phi$).

7. The method as claimed in any preceding Claim wherein the further constraint comprises either:

c) a first further constraint comprising the third value ($\hat{\mu}$) and representing a feasibility cut; or,
d) a second further constraint comprising the fourth value (r) and represents an optimality cut.

8. The method as claimed in any preceding Claim wherein the first version of the MP further comprises a second initial constraint (ci2); the method further comprising selecting, for replacement, the first initial constraint from the group of the first initial constraint and second initial constraint.

9. The method of claim 8 further comprising selecting the first initial constraint (ci1), from the group of the first initial constraint (ci1) and second initial constraint (ci2), based on the second initial constraint (ci2) providing an increased convergence to a solution of the MIP than the first initial constraint.

10. The method as claimed in any preceding Claim further comprising encoding the second version MP2of the MP into a Quadratic Unconstrained Binary Optimisation, QUBO, model.

11. The method as claimed in Claim 10 further comprising converting the further constraint into a penalty function for the QUBO.

12. The method as claimed in Claims 10 or 11 further comprising determining a number of qubits for the QUBO and replacing the first initial constraint with the further constraint upon comparing the determined number of qubits to a threshold number of qubits.

13. The method as claimed in any of Claims 10 to 12 further comprising determining a Hamiltonian using the QUBO, the Hamiltonian for use in operating the quantum computer.

14. The method as claimed in any preceding Claim wherein the quantum computer is a neutral atom quantum computer.

15. A system comprising a computer processor and a quantum computer (14), and for determining a solution to a Master Problem (4), MP; the MP derived from a Mixed-Integer Program, MIP (6), problem and associated with a Sub-Problem (8), SP;

the MIP (6) problem for providing a solution to:

a first group (x) of one or more integer variables (x1, x2, xn); and,
a second group (y) of one or more first continuous variables (y1, y2, yn);

the MP (4) for outputting a solution for:
the group (x) of one or more respective integer variables (x1, x2, xn);
the SP (8), comprising:

a primal problem (10) comprising the group (y) of one or more first continuous variables (y1, y2, yn); and,
a dual problem (12) associated with the primal problem (10);

the quantum computer configured to determine a solution (s1) to a first version (MP1) of the MP; the first version of the MP comprising at least a first initial constraint (ci1); the solution to the first version of the MP comprising:
one or more first values ($\hat{x}$) for the group (x) of one or more respective integer variables (x1, x2, xn); and,
the computer processor or the quantum computer configured to run the SP, using the one or more first values ($\hat{x}$), to determine either:

a third value ($\hat{\mu}$), corresponding to the dual problem, for a solution for the SP;
a fourth value (r) corresponding to an extreme ray;

the computer processor configured to generate, using the third value or fourth value, a further constraint (c1) for a second version of the MP (MP2);
the computer processor configured to generate the second version of the MP (MP2) by replacing the first initial constraint (ci1) with the further constraint;
the quantum computer further configured to determine a further solution (s2) to the second version of the MP (MP2).

Fig. 1

S102

Start

S104

Solve Master
Problem

$\hat{x}$

S106

Solve
Subproblem

S108

Feasible?

No → S110 Add Feasibility
Cut

Yes

S114

Add Optimality
Cut

Yes

S112

$f(\hat{x}) < \phi$

No

S116

End

100

Fig. 2

Fig. 3

32

Fig. 4

Fig. 5c

Fig. 5b

Fig. 5a

Fig. 6b

Fig. 6a

Fig. 7

EP 4 560 543 A1

## Algorithm1 Register Embedding Algorithm

**Input:** $V$             ▷ Set of atoms to be placed
**Input:** $Q$                ▷ QUBO matrix

1: $P \leftarrow \emptyset$       ▷ Set of atom-position pairs representing the placement of atoms. Initially, $P$ is empty
2: $U \leftarrow$ zero $|V| \times |V|$ matrix ▷ Represent interactions. initially no atom embedded, so no interactions
3: Choose the first atom $u$ from $V$   ▷ For example the one with the lowest index
4: Select a QUBO variable $v$ to be embedded   ▷ Randomly, for example
5: Choose a position $p$ from $P$     ▷ The center for example
6: $P \leftarrow (u, p)$            ▷ Place $u$ on $p$
7: $P \leftarrow P \setminus \{p\}$        ▷ Position $p$ no longer available
8: $V \leftarrow V \setminus \{u\}$      ▷ Remove atom $u$, already embedded
9: **while** $V \neq \emptyset$ (not all atoms are placed) **do**
10:   Choose another atom $u$ from $V$
11:   Select a variable $v$ from $Q$ not embedded
12:   Choose position $p$ from $P$ minimizing
13:   $\sum\limits_{v \text{ not embedded}} |Q_{u,v} - U_{p,p(v)}|$   ▷ $p(v)$ denotes the position of atom $v$
14:   $P \leftarrow (u, p)$           ▷ Place $u$ on $p$
15:   $P \leftarrow P \setminus \{p\}$      ▷ Position $p$ no longer available
16:   $V \leftarrow V \setminus \{u\}$    ▷ Remove atom $u$, already embedded
17: **end while**
18: **return** $P$

Fig. 8

| Iteration | Master QUBO | Master Solution | Subproblem Solution | Generated Penalty | Type of Penalty |
|---|---|---|---|---|---|
| 1 | - (-15 * x[1]^2 + -10 * x[2]^2) + 100 * (-1.0 * x[1]^2 + -1.0 * x[2]^2 + 2^0 * s_m_1_1 - -1)^2 + (2^4 * w[1]^2 + 2^3 * w[2]^2 + 2^2 * w[3]^2 + 2^1 * w[4]^2 + 2^0 * w[5]^2) | $\Phi$: 31.5 obj: 21.5 x[1]: 0 x[2]: 1 s_m_1_1: 0 | Objective Value: 11.0 y1: 0.0, y2: 0.0, y3: 1.0, y4: 1.0 $\mu\_1$: 5.0, $\mu\_2$: -0.0, $\mu\_3$: -0.0, $\mu\_4$: 6.0, $\mu\_5$: -3.0, $\mu\_6$: -3.0, $\mu\_7$: -0.0, $\mu\_8$: -0.0 | 100 * (2^4 * w[1] + 2^3 * w[2] + 2^2 * w[3] + 2^1 * w[4] + 2^0 * w[5] + 3.0 * (-1 * x[1]) + 3.0 * (-1 * x[1]) + 2^0 * s1_1 - (1 * 5.0 + 1 * 6.0))^2 | Optimality |
| 2 | - (-15 * x[1]^2 + -10 * x[2]^2) + 100 * (-1.0 * x[1]^2 + -1.0 * x[2]^2 + 2^0 * s_m_1_1 - -1)^2 + (2^4 * w[1]^2 + 2^3 * w[2]^2 + 2^2 * w[3]^2 + 2^1 * w[4]^2 + 2^0 * w[5]^2) | $\Phi$: 17.0 obj: 2.0 x[1]: 1 x[2]: 0 s_m_1_1: 0 s1_1: 0 | Objective Value: 17.0 y1: 1.0, y2: 1.0, y3: 0.0, y4: 0.0 $\mu\_1$: 8.0, $\mu\_2$: -0.0, $\mu\_3$: -0.0, $\mu\_4$: 9.0, $\mu\_5$: -0.0, $\mu\_6$: -0.0, $\mu\_7$: -0.0, $\mu\_8$: -0.0 | - | - |

Fig. 9

EP 4 560 543 A1

Fig. 10

Fig. 11

EP 4 560 543 A1

Fig. 12

Europäisches
Patentamt

European
Patent Office

Office européen
des brevets

## EUROPEAN SEARCH REPORT

**Application Number**

**EP 23 30 7057**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICOLA FRANCO: "Efficient MILP Decomposition in Quantum Computing for ReLU Network Robustness", 2023 IEEE INTERNATIONAL CONFERENCE ON QUANTUM COMPUTING AND ENGINEERING (QCE), [Online] 11 October 2023 (2023-10-11), pages 524-534, XP093160092, DOI: 10.1109/QCE57702.2023.00066 ISBN: 979-8-3503-4323-6 Retrieved from the Internet: URL:https://arxiv.org/pdf/2305.00472> [retrieved on 2024-05-07] * abstract * * page 1 - page 3 * * page 5 - page 5 * * page 10 - page 10 * ----- | 1-15 | INV. G06N10/60 |
| A | Constantin Dalyac: "Exploring the impact of graph locality for the resolution of MIS with neutral atom devices", arXiv.org, 23 June 2023 (2023-06-23), XP093159944, Ithaca DOI: 10.48550/arxiv.2306.13373 Retrieved from the Internet: URL:https://arxiv.org/pdf/2306.13373 [retrieved on 2024-05-07] * the whole document * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 7 May 2024 | Tsakonas, Athanasios |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 23 30 7057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BORIS ALBRECHT: "Quantum feature maps for graph machine learning on a neutral atom quantum processor", PHYSICAL REVIEW A, [Online] vol. 107, no. 4, 29 November 2022 (2022-11-29), XP093160388, ISSN: 2469-9926, DOI: 10.1103/PhysRevA.107.042615 Retrieved from the Internet: URL:https://arxiv.org/pdf/2211.16337> [retrieved on 2024-05-07] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 7 May 2024 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. NAOUM-SAWAYA** ; **S. ELHEDHLI**. An interior-point benders based branch-and-cut algorithm for mixed integer programs. *Annals of Operations Research*, 2013, vol. 210, 33-55
- **T. G. CRAINIC** ; **M. HEWITT** ; **W. REI**. Partial decomposition strategies for two-stage stochastic integer programs.. *CIRRELT*, 2014, vol. 88
- **Y. YANG** ; **J. M. LEE**. A tighter cut generation strategy for acceleration of benders decomposition. *Computers & Chemical Engineering*, 2012, vol. 44, 84-93
- **C. I. F'ABI'AN** ; **Z. SZ"OKE**. *Computational Management Science*, 2007, vol. 4, 313-353
- **A. J. RUBIALES** ; **P. A. LOTITO** ; **L. A. PARENTE**. Stabilization of the generalized benders decomposition applied to short-term hydrothermal coordination problem. *IEEE Latin America Transactions*, 2013, vol. 11 (5), 1212-1224
- **N. BEHESHTI ASL** ; **S. MIRHASSANI**. Accelerating benders decomposition: multiple cuts via multiple solutions. *Journal of Combinatorial Optimization*, 2019, vol. 37, 806-826
- **E. FARHI** ; **J. GOLDSTONE** ; **S. GUTMANN**. A quantum approximate optimization algorithm. *arXiv:1411.4028*, 2014
- Hybrid quantum benders' decomposition for mixed-integer linear programming. **Z. ZHAO** ; **L. FAN** ; **Z. HAN**. 2022 IEEE Wireless Communications and Networking Conference (WCNC). IEEE, 2022, 2536-2540
- **N. G. PATERAKIS**. Hybrid quantum-classical multi-cut benders approach with a power system application. *Computers & Chemical Engineering*, 2023, vol. 172, 108161
- **N. FRANCO** ; **T. WOLLSCHLAGER** ; **B. POGGEL** ; **S. GUNNEMANN** ; **J. M. LORENZ**. Efficient milp decomposition in quantum computing for relu network robustness. *arXiv:2305.00472*, 2023
- **M. PONCE** ; **R. HERRMAN** ; **P. C. LOTSHAW** ; **S. POWERS** ; **G. SIOPSIS** ; **T. HUMBLE** ; **J. OSTROWSKI**. Graph decomposition techniques for solving combinatorial optimization problems with variational quantum algorithms. *arXiv:2306.00494*, 2023
- **D. T. DO** ; **N. TRIEU** ; **D. T. NGUYEN**. Quantum-based distributed algorithms for edge node placement and workload allocation. *arXiv:2306.01159*, 2023
- **S. BOYD** ; **N. PARIKH** ; **E. CHU** ; **B. PELEATO** ; **J. ECKSTEIN et al.** Distributed optimization and statistical learning via the alternating direction method of multipliers. *Foundations and Trends in Machine learning*, 2011, vol. 3 (1), 1-122
- **HAROLD J METCALF** ; **PETER VAN DER STRATEN**. Laser cooling and trapping of atoms.. *JOSA B*, 2003, vol. 20 (5), 887-908
- Florence Nogrette, Henning Labuhn, Sylvain de Leseleuc, Thierry Lahaye and Antoine Browaeys. Synthetic three-dimensional atomic structures assembled atom by atom.. *Nature*, September 2018, vol. 561 (7721), 79-82